(19) Europäisches Patentamt
European Patent Office
Office européen des brevets

(11) **EP 3 961 555 A1**

(12) **EUROPEAN PATENT APPLICATION**
published in accordance with Art. 153(4) EPC

(43) Date of publication:
**02.03.2022 Bulletin 2022/09**

(21) Application number: **19925954.0**

(22) Date of filing: **25.04.2019**

(51) International Patent Classification (IPC):
**G06T 7/00** (2017.01)

(52) Cooperative Patent Classification (CPC):
**G06T 7/00**

(86) International application number:
**PCT/JP2019/017585**

(87) International publication number:
**WO 2020/217371 (29.10.2020 Gazette 2020/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **OMRON Corporation
Shiokoji-dori, Shimogyo-Ku
Kyoto-shi
Kyoto 600-8530 (JP)**

(72) Inventor: **NISIYUKI, Kenta
Kyoto-shi, Kyoto 600-8530 (JP)**

(74) Representative: **Horn Kleimann Waitzhofer
Patentanwälte PartG mbB
Ganghoferstrasse 29a
80339 München (DE)**

(54) **LEARNING SYSTEM, DATA GENERATING DEVICE, DATA GENERATING METHOD, AND DATA GENERATING PROGRAM**

(57) A learning system trains neural networks to output, in response to an input of first training data included in each first learning dataset, values each fitting first answer data from output layers and values fitting each other from attention layers each nearer an input end of each neural network than the output layer. The learning system evaluates, based on the output value obtained from the attention layer in each of the trained neural networks, a degree of output instability for each piece of second training data and extracts, based on the evaluation result, at least one piece of second training data to be labeled with second answer data.

FIG. 1

**Description**

TECHNICAL FIELD

The present invention relates to a learning system, a data generation apparatus, a data generation method, and a data generation program.

BACKGROUND

Classifiers including neural networks have been developed to perform classification tasks on image data obtained in various situations such as inspection of product quality and monitoring of a driver. For example, Patent Literature 1 describes an inspection apparatus that uses a trained first neural network to determine whether an inspection object in an image is normal or abnormal and uses a trained second neural network to classify the type of abnormality in response to determining that the inspection object is abnormal.

A neural network is an example of a supervised learning model. Other examples of supervised learning models include support vector machines, linear regression models, decision tree models, and other models. In supervised learning, a classifier is trained to output, in response to an input of training image data, a value that fits the corresponding answer data. A trained classifier performs a predetermined classification task on unknown image data.

The performance of the trained classifier basically depends on the number of samples of learning data. In other words, more samples of learning data enable higher performance of the classifier, such as accurate classification of product quality or of the state of a driver. Supervised learning uses, as learning data, multiple learning datasets each including a pair of training image data and answer data indicating the correct answer to the image data in a classification task. Typically, labeling work of image data with answer data is performed manually by an operator, with efforts and thus costs involved in preparing many samples.

Active learning has been developed to improve the performance of a classifier with fewer samples. Active learning evaluates, based on a predetermined index, the degree of contribution of a training data sample unlabeled with answer data to improved performance of a classifier. Samples with a high degree of contribution to the improved performance are extracted based on the evaluation and are labeled with answer data. In this manner, a high-performance classifier is built through supervised learning using learning datasets obtained with fewer training data samples that are labeled with answer data.

Non-Patent Literature 1 describes a method using output values from multiple neural networks as indices for evaluating the degree of contribution of each sample to improved performance of a classifier. More specifically, multiple trained neural networks are built using image data samples that have been labeled with answer data. A training data sample unlabeled with answer data is then input into each trained neural network to evaluate the degree of instability of the output value from the neural network.

A higher degree of instability of the output value from each trained neural network indicates that the classifier built with the existing learning datasets has lower classification performance for the sample and also indicates that the sample has a higher degree of contribution to improved classifier performance. Thus, samples with a higher degree of instability are each labeled with answer data to generate new learning datasets. The generated new learning datasets and the existing learning datasets are then used for retraining the neural networks. A high-performance classifier can thus be built using fewer training data samples labeled with answer data.

CITATION LIST

PATENT LITERATURE

Patent Literature 1: Japanese Unexamined Patent Application Publication No. 2012-026982

NON-PATENT LITERATURE

Non-Patent Literature 1: William H. Beluch, Tim Genewein, Andreas Nürnberger, Jan M. Kohler, "The power of ensembles for active learning in image classification," the IEEE Conference on Computer Vision and Pattern Recognition (CVPR), pp. 9368-9377, 2018

SUMMARY

TECHNICAL PROBLEM

The inventor of the present invention has noticed that the active learning method using multiple neural networks described in Non-Patent Literature 1 has the issues below. The method uses the output value obtained from the output layer in each neural network for an acquisition function to evaluate the degree of output instability of each neural network for a sample unlabeled with answer data. In Non-Patent Literature 1, each neural network uses a softmax layer as an output layer in performing a classification task. The output value from the softmax layer is used for an acquisition function to calculate, for example, entropy.

However, image data may undergo any estimation task other than a classification task of a feature. For example, image data may undergo a regression task, segmentation, and other estimation tasks. Regression tasks derive, for example, continuous values showing a specific feature, such as probability. Segmentation extracts, for example, image areas including portions showing specific features.

The output format of the neural network can differ depending on the type of task. Thus, the same acquisition function may be unusable in neural networks for different tasks. In other words, an acquisition function set for a classification task may not be directly used as an acquisition function in another task. The acquisition function is to be changed in accordance with the output format of the output layer that differs depending on the type of task. Thus, neural networks for different tasks cannot readily use a common index in active learning with the known method.

The same issue may arise in situations involving various types of data, other than image data, as training data, such as sound data, numeral data, text data, and a combination of different types of data. Supervised learning can be used in any situation that involves generation of an estimator for performing any estimation task on any type of data. In each situation, a common index is unusable in neural networks for different tasks in active learning.

In response to the above issue, one or more aspects of the present invention are directed to a technique for allowing a common index to be used among neural networks for different tasks in active learning.

SOLUTION TO PROBLEM

The system, apparatus, method, and program according to one or more aspects of the present invention have the structures described below.

A learning system according to an aspect of the present invention includes a first data obtainer, a learning processor, a second data obtainer, an evaluator, an extractor, and a generator. The first data obtainer obtains a plurality of first learning datasets each including a pair of first training data and first answer data indicating a feature included in the first training data. The learning processor trains a plurality of neural networks through machine learning using the obtained plurality of first learning datasets. The plurality of neural networks each include a plurality of layers between an input end and an output end of each neural network. The plurality of layers include an output layer nearest the output end and an attention layer nearer the input end than the output layer. The machine learning includes training the plurality of neural networks to output, in response to an input of the first training data included in each of the plurality of first learning datasets into each of the plurality of neural networks, values each fitting the first answer data from the output layers in the plurality of neural networks and values fitting each other from the attention layers in the plurality of neural networks. The second data obtainer obtains a plurality of pieces of second training data. The evaluator obtains an output value from the attention layer in each of the plurality of neural networks in response to an input of each of the plurality of pieces of second training data into each of the trained plurality of neural networks and calculates, based on the output value obtained from the attention layer in each of the plurality of neural networks, a score indicating a degree of output instability of each of the plurality of neural networks for each of the plurality of pieces of second training data. The extractor extracts, from the plurality of pieces of second training data, at least one piece of second training data with the score satisfying a condition for determining that the degree of output instability is high. The generator generates at least one second learning dataset each including a pair of the extracted at least one piece of second training data and second answer data indicating a feature included in the extracted at least one piece of second training data by receiving an input of the second answer data for each of the extracted at least one piece of second training data. The learning processor retrains the plurality of neural networks through machine learning or trains a learning model different from each of the plurality of neural networks through supervised learning using the plurality of first learning datasets and the at least one second learning dataset.

The output layer in a neural network may be in a format set for the type of estimation task to be learned. For example, a softmax layer may be used as the output layer to perform a classification task. In contrast, a layer (e.g., an intermediate layer) nearer the input end than the output layer in a neural network may be in a format that can be set independently of the type of estimation task. For example, an estimation task on image data may be performed using convolutional neural networks. In this situation, an intermediate layer, such as a convolutional layer, a pooling layer, or a fully connected layer, in a common output format may be used independently of the type of estimation task to be learned (or used among convolutional neural networks to learn different estimation tasks).

In the learning system with this structure, each neural network including multiple layers includes a layer nearer the input end than the output layer set as an attention layer. An attention layer may be selected from any layers other than the output layer. In machine learning using multiple first learning datasets, the neural networks are trained to output, in response to an input of the first training data, values each fitting the first answer data from the output layers and values fitting each other from the attention layers. Such machine learning is used to train each neural network to perform an estimation task on unknown input data and train the attention layers in the neural networks to output values that are equal or approximate to each other in response to input data on which the estimation task can be performed appropriately. In other words, although the training to output values each fitting the first answer data alone in the machine learning may cause a variance in the outputs from the attention layers in the neural networks, further performing the training to output values fitting each other from the attention layers enables matching between the outputs from the attention layers in the neural networks.

Thus, any variance in output values from the attention layers in the neural networks, or more specifically, a high degree of output instability in response to an input of a training data sample into each neural network indicates low estimation performance of each neural network for the sample. The sample is thus estimated to have a high degree of contribution to improved performance of an estimator that performs the estimation task. The learning system with this structure uses this estimation to extract pieces of second training data estimated to have a high degree of contribution to improved performance of the estimator.

More specifically, the learning system with this structure calculates, based on the output value from the attention layer in each neural network, the score indicating the degree of output instability of each neural network for each piece of second training data (specifically, each training data sample). The relationship between the output value from the attention layers in each neural network and the score may be described mathematically using an acquisition function. In this case, the output value from the attention layer in each neural network is input into the acquisition function to calculate the score indicating the degree of output instability of each neural network for each piece of second training data. The learning system with this structure extracts, from multiple pieces of second training data, at least one piece of second training data with the score satisfying a condition for determining that the degree of output instability is high.

The learning system with this structure thus sets a layer in a common output format, such as a convolutional layer, a pooling layer, or a fully connected layer, as the attention layer, and evaluates the degree of output instability of each neural network for each sample using a common index (e.g., the same acquisition function), independently of the type of task to be performed by the neural networks. In other words, the index for evaluating the degree of output instability remains unchanged for any tasks to be performed by the neural networks. The evaluation results are then used to appropriately extract second training data pieces estimated to have a high degree of contribution to improved performance of the estimator. The learning system with this structure thus allows a common index to be used among neural networks for different tasks in active learning.

The learning system with this structure generates at least one second learning dataset by labeling the extracted piece(s) of second training data with second answer data. The learning system with this structure then uses the first learning datasets and the at least one second learning dataset for retraining each neural network or training a new learning model through supervised learning. A high-performance estimator can thus be built using fewer training data samples labeled with answer data.

Each neural network may be of any type that includes multiple layers and may be selected as appropriate in each embodiment. Each neural network may be, for example, a fully connected neural network, a convolutional neural network, or a recurrent neural network. The output layer may be in an output format set in accordance with the task to be performed by each neural network. The attention layer may be selected as appropriate from the layers other than the output layer. The attention layer may be, for example, an intermediate layer such as a convolutional layer, a pooling layer, or a fully connected layer. Each layer may have an architecture designed as appropriate. The learning model may be of any type that can be trained through supervised learning and may be selected as appropriate in each embodiment. For example, the learning model may be a support vector machine, a linear regression model, or a decision tree model.

The training data may be of any type selected as appropriate in each embodiment. The training data may be, for example, image data, sound data, numerical data, or text data. Feature estimation may include, for example, classification, regression, and segmentation. A feature may include any element that can be estimated from data. Examples of estimation tasks include estimating the state (quality) of a product in image data, estimating the state of a driver based on sensing data obtained through monitoring of the driver, and estimating the health state of a target person based on vital data for the target person. Feature estimation may include predicting an element to occur in the future. In this case, the feature may include a sign of an element to occur in the future. The answer data may be determined as appropriate for an estimation task to be learned. The answer data may include, for example, information indicating the category of a feature, information indicating the probability of a feature to occur, information indicating the value of a feature, and information indicating the range including a feature.

In the learning system according to the above aspect, the plurality of neural networks may be convolutional neural networks, and the attention layers may be convolutional layers. This structure allows a common index to be used among convolutional neural networks for different tasks in active learning.

In the learning system according to the above aspect, the output values output from the attention layers in the plurality of neural networks fitting each other may indicate that attention maps derived from feature maps output from the convolutional layers in the convolutional neural networks match each other. The attention maps have characteristics similar to the characteristics of the output from a softmax function. The acquisition function applied to the softmax layer can thus be directly used for the attention maps. In other words, the score for each piece of second training data can be derived from the output value of the attention layer using a known acquisition function for classification tasks. This structure partially uses a known computation module and thus reduces the initial cost of, for example, the system according to one or more aspects of the present invention.

In the learning system according to the above aspect, the plurality of layers in each of the plurality of neural networks may include computational parameters for computation. Training the plurality of neural networks may include iteratively adjusting the computational parameters for the plurality of neural networks to reduce an error between the output value output from the output layer in each of the plurality of neural networks and the first answer data and to reduce an error between the output values output from the attention layers in the plurality of neural networks in response to the input of the first training data included in each of the plurality of first learning datasets into each of the plurality of neural networks. A learning rate for the error between the output values output from the attention layers may increase in response to every adjustment of the computational parameters. In an early stage of learning, the attention layers in the neural networks can output values greatly differing from each other. This structure gradually increases the learning rate for the error between the output values from the attention layers to enable appropriate convergence in the learning for fitting the output values from the attention layers in the neural networks with each other. The computational parameters include, for example, the weights of the connections between neurons and the threshold of each neuron.

In the learning system according to the above aspect, the first training data and the second training data may include image data of a product, and the feature may include a state of the product. This structure allows a common index to be used among neural networks for different tasks in active learning to build an estimator for visual inspection.

The product in the image data may include, for example, any of products transported in a production line, such as electronic devices, electronic components, automotive parts, chemicals, and food products. Electronic components may include, for example, substrates, chip capacitors, liquid crystals, and relay coils. Automotive parts may include, for example, connecting rods, shafts, engine blocks, power window switches, and panels. Chemicals may include, for example, packaged tablets or unpackaged tablets. The product may be a final product after completion of the manufacturing process, an intermediate product during the manufacturing process, or an initial product before undergoing the manufacturing process. The state of the product may be, for example, a feature including the presence or absence of any defect. The feature may thus include any defect of the product such as a scratch, a stain, a crack, a dent, a burr, uneven color, and foreign matter contamination.

In the learning system according to the above aspect, the first training data and the second training data may include sensing data obtained from a sensor monitoring a state of a subject, and the feature may include the state of the subject. This structure allows a common index to be used among neural networks for different tasks in active learning to build an estimator for estimating the state of the target person.

The sensor may be of any type that can monitor the state of a person (a subject or target person) and may be selected as appropriate in each embodiment. For example, the sensor may be a camera or a vital sensor. For example, the camera may be a common RGB camera, a depth camera, or an infrared camera. For example, the vital sensor may be a clinical thermometer, a blood pressure meter, or a pulse meter. The sensing data may thus include, for example, image data and vital measurement data. The state of a person may include, for example, the health condition of the person. The health condition may be represented in any manner selected as appropriate in each embodiment. For example, the health condition may include whether the person is healthy or shows any sign of disease. The state of a person being a driver may include, for example, the degree of drowsiness felt by the person, the degree of fatigue felt by the person, the capacity of the person to attend to driving, and any combination of these.

The aspects of the present invention are not limited to the above learning system. For example, an apparatus in one aspect of the present invention may include, for example, a section of the learning system according to any one of the above aspects, such as a section for training the neural networks through machine learning or a section for extracting pieces of second training data having a high degree of contribution to improved performance of an estimator. An apparatus corresponding to the section for training the neural networks through machine learning may be referred to as a learning apparatus. An apparatus corresponding to the section for extracting pieces of second training data having a high degree of contribution to improved performance of an estimator may be referred to as a data generation apparatus. One aspect of the present invention may include an apparatus that uses an estimator (a trained neural network or learning model) built through machine learning using the first learning datasets and the at least one second learning dataset. The apparatus using the estimator may be referred to as an estimation apparatus. The estimation apparatus may be named differently in accordance with the type of estimation task.

For example, a learning apparatus in an aspect of the present invention includes a first data obtainer that obtains a plurality of first learning datasets each including a pair of first training data and first answer data indicating a feature included in the first training data, and a learning processor that trains a plurality of neural networks through machine learning using the obtained plurality of first learning datasets. The plurality of neural networks each include a plurality of layers between an input end and an output end of each neural network. The plurality of layers include an output layer nearest the output end and an attention layer nearer the input end than the output layer. The machine learning includes training the plurality of neural networks to output, in response to an input of the first training data included in each of the plurality of first learning datasets into each of the plurality of neural networks, values each fitting the first answer data from the output layers in the plurality of neural networks and values fitting each other from the attention layers in the plurality of neural networks.

For example, a data generation apparatus according to an aspect of the present invention includes a model obtainer, a data obtainer, an evaluator, an extractor, and a generator. The model obtainer obtains a plurality of neural networks trained through machine learning using a plurality of first learning datasets each including a pair of first training data and first answer data indicating a feature included in the first training data. The plurality of neural networks each include a plurality of layers between an input end and an output end of each neural network. The plurality of layers include an output layer nearest the output end and an attention layer nearer the input end than the output layer. The plurality of neural networks are trained through the machine learning to output, in response to an input of the first training data included in each of the plurality of first learning datasets into each of the plurality of neural networks, values each fitting the first answer data from the output layers in the plurality of neural networks and values fitting each other from the attention layers in the plurality of neural networks. The data obtainer obtains a plurality of pieces of second training data. The evaluator obtains an output value from the attention layer in each of the plurality of neural networks in response to an input of each of the plurality of pieces of second training data into each of the trained plurality of neural networks and calculates, based on the output value obtained from the attention layer in each of the plurality of neural networks, a score indicating a degree of output instability of each of the plurality of neural networks for each of the plurality of pieces of second training data. The extractor extracts, from the plurality of pieces of second training data, at least one piece of second training data with the score satisfying a condition for determining that the degree of output instability is high. The generator generates at least one second learning dataset each including a pair of the extracted at least one piece of second training data and second answer data indicating a feature included in the extracted at least one piece of second training data by receiving an input of the second answer data for each of the extracted at least one piece of second training data.

The data generation apparatus according to the above aspect may further include an output unit that outputs the at least one generated second learning dataset in a manner usable for training a learning model through supervised learning.

In one aspect of the present invention, another form of the learning system, the learning apparatus, the data generation apparatus, the estimation apparatus, or the system including the estimation apparatus in one of the above aspects may be an information processing method, any program, any storage medium storing the program readable by a computer, or another device or machine for implementing all or some of the above features. The computer-readable recording medium includes a medium storing a program or other information in an electrical, magnetic, optical, mechanical, or chemical form.

For example, a learning method according to an aspect of the present invention is an information processing method implementable by a computer. The learning method includes obtaining a plurality of first learning datasets, training a plurality of neural networks, obtaining a plurality of pieces of second training data, obtaining an output value, calculating a score, extracting at least one piece of second training data, generating at least one second learning dataset, and retraining the plurality of neural networks or training a learning model. The obtaining the plurality of first learning datasets includes obtaining the plurality of first learning datasets each including a pair of first training data and first answer data indicating a feature included in the first training data. The training the plurality of neural networks includes training the plurality of neural networks through machine learning using the obtained plurality of first learning datasets. The plurality of neural networks each include a plurality of layers between an input end and an output end of each neural network. The plurality of layers include an output layer nearest the output end and an attention layer nearer the input end than the output layer. The machine learning includes training the plurality of neural networks to output, in response to an input of the first training data included in each of the plurality of first learning datasets into each of the plurality of neural networks, values each fitting the first answer data from the output layers in the plurality of neural networks and values fitting each other from the attention layers in the plurality of neural networks. The obtaining the output value includes obtaining the output value from the attention layer in each of the plurality of neural networks in response to an input of each of the plurality of pieces of second training data into each of the trained plurality of neural networks. The calculating the score includes calculating, based on the output value obtained from the attention layer in each of the plurality of neural networks, the score indicating a degree of output instability of each of the plurality of neural networks for each of the plurality of pieces of second training data. The extracting the at least one piece of second training data includes extracting, from the plurality of pieces of second training data, the at least one piece of second training data with the score satisfying a condition for determining that the degree of output instability is high. The generating the at least one second learning dataset includes generating the at least one second learning dataset each including a pair of the extracted at least one piece of second training data and second answer data indicating a feature included in the extracted at least one piece of second training data by receiving an input of the second answer data for each of the extracted at least one piece of second training data. The retraining the plurality of neural networks or training the learning model includes retraining the plurality of neural networks through machine learning or training the learning model different from each of the plurality of neural networks through supervised learning using the plurality of first learning datasets and the at least one second learning dataset.

For example, a data generation method according to an aspect of the present invention is an information processing method implementable by a computer. The data generation method includes obtaining a plurality of neural networks, obtaining a plurality of pieces of second training data, obtaining an output value, calculating a score, extracting at least one piece of second training data, and generating at least one second learning dataset. The obtaining the plurality of neural networks includes obtaining the plurality of neural networks trained through machine learning using a plurality of first learning datasets each including a pair of first training data and first answer data indicating a feature included in the first training data. The plurality of neural networks each include a plurality of layers between an input end and an output end of each neural network. The plurality of layers include an output layer nearest the output end and an attention layer nearer the input end than the output layer. The plurality of neural networks are trained through the machine learning to output, in response to an input of the first training data included in each of the plurality of first learning datasets into each of the plurality of neural networks, values each fitting the first answer data from the output layers in the plurality of neural networks and values fitting each other from the attention layers in the plurality of neural networks. The obtaining the output value includes obtaining the output value from the attention layer in each of the plurality of neural networks in response to an input of each of the plurality of pieces of second training data into each of the trained plurality of neural networks. The calculating the score includes calculating, based on the output value obtained from the attention layer in each of the plurality of neural networks, the score indicating a degree of output instability of each of the plurality of neural networks for each of the plurality of pieces of second training data. The extracting the at least one piece of second training data includes extracting, from the plurality of pieces of second training data, the at least one piece of second training data with the score satisfying a condition for determining that the degree of output instability is high. The generating the at least one second learning dataset includes generating the at least one second learning dataset each including a pair of the extracted at least one piece of second training data and second answer data indicating a feature included in the extracted at least one piece of second training data by receiving an input of the second answer data for each of the extracted at least one piece of second training data.

For example, a data generation program according to an aspect of the present invention is a program for causing a computer to perform operations including obtaining a plurality of neural networks, obtaining a plurality of pieces of second training data, obtaining an output value, calculating a score, extracting at least one piece of second training data, and generating at least one second learning dataset. The obtaining the plurality of neural networks includes obtaining the plurality of neural networks trained through machine learning using a plurality of first learning datasets each including a pair of first training data and first answer data indicating a feature included in the first training data. The plurality of neural networks each include a plurality of layers between an input end and an output end of each neural network. The plurality of layers include an output layer nearest the output end and an attention layer nearer the input end than the output layer. The plurality of neural networks are trained through the machine learning to output, in response to an input of the first training data included in each of the plurality of first learning datasets into each of the plurality of neural networks, values each fitting the first answer data from the output layers in the plurality of neural networks and values fitting each other from the attention layers in the plurality of neural networks. The obtaining the output value includes obtaining the output value from the attention layer in each of the plurality of neural networks in response to an input of each of the plurality of pieces of second training data into each of the trained plurality of neural networks. The calculating the score includes calculating, based on the output value obtained from the attention layer in each of the plurality of neural networks, the score indicating a degree of output instability of each of the plurality of neural networks for each of the plurality of pieces of second training data. The extracting the at least one piece of second training data includes extracting, from the plurality of pieces of second training data, the at least one piece of second training data with the score satisfying a condition for determining that the degree of output instability is high. The generating the at least one second learning dataset includes generating the at least one second learning dataset each including a pair of the extracted at least one piece of second training data and second answer data indicating a feature included in the extracted at least one piece of second training data by receiving an input of the second answer data for each of the extracted at least one piece of second training data.

ADVANTAGEOUS EFFECTS

The system, apparatus, method, and program according to the above aspects of the present invention allow a common index to be used among neural networks for different tasks in active learning.

BRIEF DESCRIPTION OF THE DRAWINGS

FIG. 1 is a schematic diagram of a system, apparatus, method, and program according to an embodiment of the present invention used in one situation.
FIG. 2 is a schematic diagram of a learning apparatus in the embodiment, showing its hardware configuration.
FIG. 3 is a schematic diagram of a data generation apparatus according to the embodiment, showing its hardware configuration.
FIG. 4 is a schematic diagram of an estimation apparatus in the embodiment, showing its hardware configuration.
FIG. 5A is a schematic diagram of the learning apparatus in the embodiment, showing its software configuration.
FIG. 5B is a schematic diagram of the learning apparatus in the embodiment, showing its software configuration.
FIG. 6 is a schematic diagram of the data generation apparatus according to the embodiment, showing its software configuration.
FIG. 7 is a schematic diagram of the estimation apparatus in the embodiment, showing its software configuration.
FIG. 8 is a flowchart of a procedure performed by the learning apparatus in the embodiment.
FIG. 9 is a flowchart of a machine learning procedure performed by the learning apparatus in the embodiment.
FIG. 10 is a flowchart of a procedure performed by the data generation apparatus according to the embodiment.
FIG. 11 is a flowchart of a procedure performed by the learning apparatus in the embodiment.
FIG. 12 is a flowchart of a procedure performed by the estimation apparatus in the embodiment.
FIG. 13 is a schematic diagram of the system, apparatus, method, and program according to the embodiment of the present invention used in another situation.
FIG. 14A is a schematic diagram of an inspection apparatus in another embodiment, showing its hardware configuration.
FIG. 14B is a schematic diagram of the inspection apparatus in the other embodiment, showing its software configuration.
FIG. 15 is a schematic diagram of the system, apparatus, method, and program according to the embodiment used in still another situation.
FIG. 16A is a schematic diagram of a monitoring apparatus in another embodiment, showing its hardware configuration.
FIG. 16B is a schematic diagram of the monitor apparatus in the other embodiment, showing its software configuration.
FIG. 17 is a schematic diagram of the system, apparatus, method, and program according to the embodiment used in still another situation.

DETAILED DESCRIPTION

One or more embodiments of the present invention (hereafter, the present embodiment) will now be described with reference to the drawings. The present embodiment described below is a mere example in any aspect. The present embodiment may be variously modified or altered without departing from the scope of the present invention. More specifically, the present invention may be implemented as appropriate using the configuration specific to each embodiment. Although data used in the present embodiment is described in a natural language, such data may be specifically defined using any computer-readable language, such as a pseudo language, commands, parameters, or a machine language.

1. Example Use

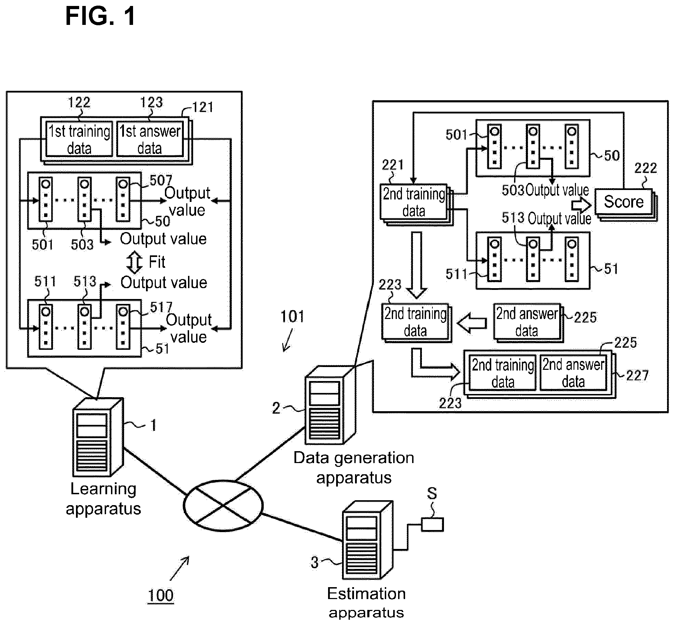

One example use of a system, apparatus, method, and program according to one or more embodiments of the present invention in one situation will now be described with reference to FIG. 1. FIG. 1 is a schematic diagram of the system, apparatus, method, and program according to one or more embodiments of the present invention used in one situation.
An estimation system 100 in the present embodiment performs a series of information processing operations including generating a learning dataset, training a learning model through machine learning, and performing a predetermined estimation task using the trained learning model. In the present embodiment, the estimation system 100 includes a learning system 101 and an estimation apparatus 3.

The learning system 101 according to the present embodiment trains, in the series of information processing operations, learning models including neural networks through machine learning and generates learning datasets. In the present embodiment, the learning system 101 includes a learning apparatus 1 and a data generation apparatus 2 each corresponding to one of the above processes.

The learning apparatus 1 in the present embodiment is a computer that trains learning models through machine learning (supervised learning) using multiple learning datasets. In the present embodiment, the learning apparatus 1 trains learning models through machine learning in two phases each for a different purpose.

In the first phase, the learning apparatus 1 uses prepared learning datasets (first learning datasets 121) to train, through machine learning, multiple neural networks to extract pieces of training data having a high degree of contribution to improved performance of an estimator, or more specifically, pieces of training data being highly valuable and to be labeled with answer data. The data generation apparatus 2 uses the multiple neural networks trained through the machine learning to generate new learning datasets (second learning datasets 227). In the second phase, the learning apparatus 1 further uses the generated new learning datasets to train a learning model to be used in an estimation task through machine learning. The estimation apparatus 3 uses the learning model trained through the machine learning to perform a predetermined estimation task on target data.

More specifically, in the first phase, the learning apparatus 1 obtains multiple first learning datasets 121. Each first learning dataset 121 includes a pair of first training data 122 and first answer data 123.

The first training data 122 may be of any type selected as appropriate for the estimation task to be learned by the learning model. The first training data 122 may be, for example, image data, sound data, numerical data, or text data. In an example situation in FIG. 1, the learning model is trained to estimate a feature included in sensing data obtained by a sensor S. In the present embodiment, the first training data 122 is thus sensing data obtained by the sensor S or a sensor of the same type.

The sensor S may be of any type selected as appropriate for the estimation task to be learned by the learning model. The sensor S may be, for example, a camera, a microphone, an encoder, a light detection and ranging (lidar) sensor, a vital sensor, or an environmental sensor. The camera may be, for example, a common digital camera for obtaining RGB images, a depth camera for obtaining depth images, or an infrared camera for imaging the amount of infrared radiation. The vital sensor may be, for example, a clinical thermometer, a blood pressure meter, or a pulse meter. The environmental sensor may be, for example, a photometer, a thermometer, or a hygrometer. For example, for a learning model trained to perform visual inspection of a product in an image, the sensor S is a camera, and the first training data 122 is image data of a product obtained by the camera.

The first answer data 123 indicates a feature included in the first training data 122. More specifically, the first answer data 123 indicates a correct answer to the first training data 122 in a predetermined estimation task. The first answer data 123 may include, for example, information indicating the category of a feature, information indicating the probability of a feature to occur, information indicating the value of a feature, and information indicating the range including a feature. For example, the first answer data 123 may indicate, in the visual inspection, whether the product includes a defect, the type of the defect in the product, or the range including a product defect.

A predetermined estimation task refers to estimating a feature included in predetermined data. Feature estimation may include classification of any phenomenon, regression of any value, and segmentation. A feature may include any element that can be estimated from data. Examples of estimation tasks include, other than estimating the state (quality) of a product in image data, estimating the state of a driver based on sensing data obtained through monitoring of the driver and estimating the health state of a target person based on vital data for the target person. Feature estimation may include predicting an element to occur in the future. In this case, the feature may include a sign of an element to occur in the future.

The learning apparatus 1 uses multiple obtained first learning datasets 121 to train multiple neural networks through machine learning. In the present embodiment, the learning apparatus 1 trains two neural networks (50, 51) as the multiple neural networks through machine learning. For ease of explanation, the two neural networks are hereafter referred to as a first neural network 50 and a second neural network 51. In the first phase, three or more neural networks, rather than the two neural networks, may undergo machine learning.

Each neural network (50, 51) includes multiple layers between an input end and an output end of the neural network. The multiple layers in each neural network (50, 51) include an output layer nearest the output end and an attention layer nearer the input end than the output layer. Each neural network (50, 51) may have any architecture (e.g., the number of layers, the type of each layer, the number of neurons included in each layer, and the connections between neurons in neighboring layers) and may be of any type determined as appropriate in each embodiment. The two neural networks (50, 51) may have different architectures. The attention layer may be selected as appropriate from the layers other than the output layer. In one example, the attention layer may be an input layer or an intermediate layer. More specifically, the attention layer may be an intermediate layer.

In the example in FIG. 1, the first neural network 50 includes at least three layers including an input layer 501 nearest the input end, an output layer 507 nearest the output end, and an attention layer 503 located as an intermediate layer. Similarly, the second neural network 51 includes at least three layers including an input layer 511 nearest the input end, an output layer 517 nearest the output end, and an attention layer 513 located as an intermediate layer. In the present embodiment, each neural network (50, 51) is a convolutional neural network, as described later. Each attention layer (503, 513) is a convolutional layer.

In machine learning using multiple first learning datasets 121, the learning apparatus 1 trains the neural networks (50, 51) to output, in response to an input of the first training data 122, values each fitting the first answer data 123 from the output layers (507, 517) and values fitting each other from the attention layers (503, 513). Such machine learning is used to train each neural network (50, 51) to perform an estimation task on unknown input data of the same type as the first training data 122 and train the attention layers (503, 513) to output values that are equal or approximate to each other in response to input data that can appropriately undergo the estimation task. Although the training to output values each fitting the first answer data alone may cause a variance in the outputs from the attention layers (503, 513) in the neural networks (50, 51), further training to output values fitting each other from the attention layers enables matching between the outputs from the attention layers (503, 513).

The data generation apparatus 2 according to the present embodiment is a computer that generates new learning datasets using the characteristics of the attention layers (503, 513). More specifically, the data generation apparatus 2 obtains multiple neural networks trained through the machine learning as described above using multiple first learning datasets 121. In the present embodiment, the data generation apparatus 2 obtains the two neural networks (50, 51). The data generation apparatus 2 obtains multiple pieces of second training data 221. Each piece of second training data 221 is of the same type as the first training data 122. In the present embodiment, each sample of second training data 221 is unlabeled with answer data.

The data generation apparatus 2 according to the present embodiment inputs each piece of second training data 221 into each of the trained neural networks (50, 51) and obtains an output value from the attention layer (503, 513) in each neural network (50, 51). The data generation apparatus 2 calculates, based on the output value obtained from the attention layer (503, 513), a score 222 indicating the degree of output instability of each neural network (50, 51) for each piece of second training data 221.

As described above, the neural networks (50, 51) are trained to yield outputs matching each other from the attention layers (503, 513). Thus, any variance in the output values from the attention layers (503, 513), or more specifically, a high degree of output instability in response to an input of a training data sample into each neural network (50, 51) indicates low estimation performance of each neural network (50, 51) for the sample. The sample is thus estimated to have a high degree of contribution to improved performance of an estimator performing an estimation task, or more specifically, to be highly valuable and to be labeled with answer data.

The data generation apparatus 2 according to the present embodiment thus extracts, from multiple pieces of second training data 221, at least one piece of second training data 223 with the score 222 satisfying a condition for determining a high degree of instability. The data generation apparatus 2 further receives, for the extracted piece(s) of second training data 223, an input of second answer data 225 indicating a feature included in the second training data 223 (more specifically, a correct answer to the piece of second training data 223 in a predetermined estimation task). The second answer data 225 is of the same type as the first answer data 123. The data generation apparatus 2 then associates the input second answer data 225 with a corresponding piece of second training data 223 to generate at least one second learning dataset 227. Each of the generated second learning datasets 227 includes a pair of second training data 223 and second answer data 225.

Each neural network (50, 51) is also trained to output, in response to an input of the first training data 122 into each first learning dataset 121, a value that fits the first answer data 123 from the output layer (507, 517). Each neural network (50, 51) can thus be used to perform a predetermined estimation task, other than for extracting pieces of second training data 223 as described above. Thus, each neural network (50, 51) may also be used in the estimation task.

In the second phase, the learning apparatus 1 according to the present embodiment obtains the generated second learning dataset(s) 227. The learning apparatus 1 may then retrain each neural network (50, 51) through machine learning using multiple first learning datasets 121 and the second learning dataset(s) 227. The learning apparatus 1 may train a learning model different from the neural networks (50, 51) through supervised learning using multiple first learning datasets 121 and the second learning dataset(s) 227. The learning model trained through such supervised learning may be used in a predetermined estimation task in the same manner as the trained neural networks (50, 51).

The estimation apparatus 3 according to the present embodiment is a computer that uses the trained learning model built by the learning apparatus 1 as an estimator and performs a predetermined estimation task on target data. The trained learning model may be any of the first neural network 50, the second neural network 51, and the different learning model.

More specifically, the estimation apparatus 3 obtains target data to undergo an estimation task. In the present embodiment, the sensor S is connected to the estimation apparatus 3. The estimation apparatus 3 obtains target data from the sensor S. The estimation apparatus 3 then inputs the obtained target data into the trained learning model and performs computation with the trained learning model. The estimation apparatus 3 obtains, from the trained learning model, an output value corresponding to an estimation result of a feature included in the target data. The estimation apparatus 3 then outputs information about the estimation result.

In the present embodiment described above, each neural network (50, 51) includes a layer nearer the input end than the output layer (507, 517) selected as the attention layer (503, 517). The output layer (507, 517) in each neural network (50, 51) is in a format set for the estimation task to be learned. In contrast, a layer nearer the input end than the output layer (507, 517) in each neural network (50, 51) is in a format that can be set independently of the estimation task. In the present embodiment, the output from the output layer (507, 517)0209 nearer the input end than the output layer (507, 517) in each neural network (50, 51) is thus used to evaluate the degree of output instability for each piece of second training data 221.

Such machine learning simply including the training to output, in response to an input of first training data 122, values each fitting the first answer data 123 from the output layers (507, 517) alone may cause a variance in the output values from the attention layers (503, 513) in response to the same input data. Thus, in the present embodiment, the machine learning also includes, in addition to the above training, training to output values that fit each other from the attention layers (503, 513). This allows the outputs from the attention layers (503, 513) to be used in the above evaluation.

The structure in the present embodiment sets layers in a common output format as the attention layers (503, 513) and evaluates the degree of output instability of each neural network (50, 51) for each piece of second training data 221 using a common index, independently of the task to be learned by each neural network (50, 51). The attention layers (503, 513) are trained to output values that fit each other. The evaluation results on the output values are thus used to appropriately extract pieces of second training data 223 estimated to have a high degree of contribution to improved performance of the estimator. The structure in the present embodiment thus allows a common index to be used among neural networks for different tasks in active learning.

In the example in FIG. 1, the learning apparatus 1, the data generation apparatus 2, and the estimation apparatus 3 are connected to one another through a network. The network may be selected as appropriate from, for example, the Internet, a wireless communication network, a mobile communication network, a telephone network, and a dedicated network. The apparatuses 1 to 3 may exchange data in any other manner selected as appropriate in each embodiment. For example, the apparatuses 1 to 3 may use a storage medium for data exchange.

In the example in FIG. 1, the learning apparatus 1, the data generation apparatus 2, and the estimation apparatus 3 are separate computers. However, the estimation system 100 may have any other structure designed as appropriate in each embodiment. For example, at least one pair of any of the learning apparatus 1, the data generation apparatus 2, and the estimation apparatus 3 may be an integrated computer. For example, at least one of the learning apparatus 1, the data generation apparatus 2, or the estimation apparatus 3 may include multiple computers.

2. Example Configuration

Hardware Configuration

Learning Apparatus

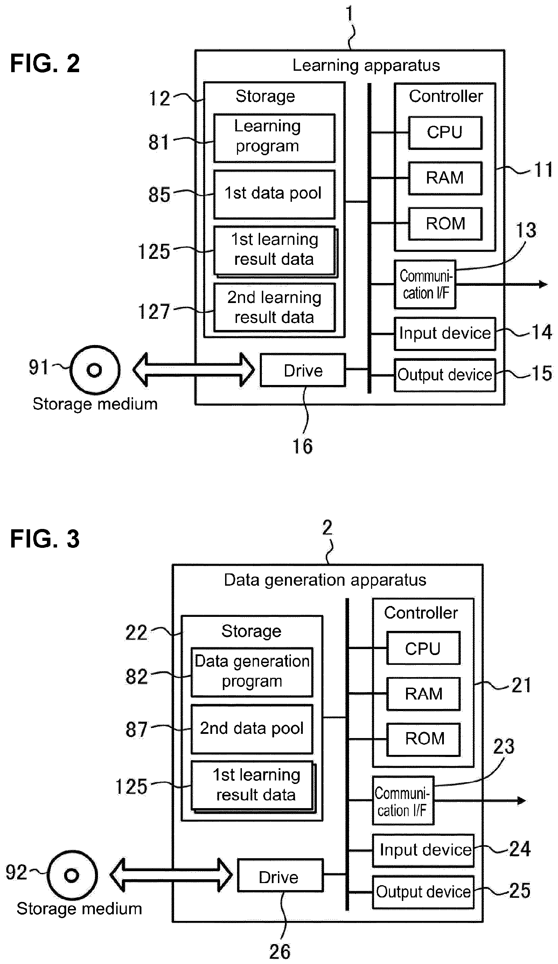

The hardware configuration of the learning apparatus 1 according to the present embodiment will now be described with reference to FIG. 2. FIG. 2 is a schematic diagram of the learning apparatus 1 according to the present embodiment, showing its hardware configuration.

As shown in FIG. 2, the learning apparatus 1 according to the present embodiment is a computer including a controller 11, a storage 12, a communication interface 13, an input device 14, an output device 15, and a drive 16 that are electrically connected to one another. In FIG. 2, the communication interface is abbreviated as the communication I/F.

The controller 11 includes, for example, a central processing unit (CPU) as a hardware processor, a random-access memory (RAM), and a read-only memory (ROM). The controller 11 performs information processing based on programs and various items of data. The storage 12, an example of a memory, includes, for example, a hard disk drive or a solid state drive. In the present embodiment, the storage 12 stores various items of information including a learning program 81, a first data pool 85, first learning result data 125, and second learning result data 127.

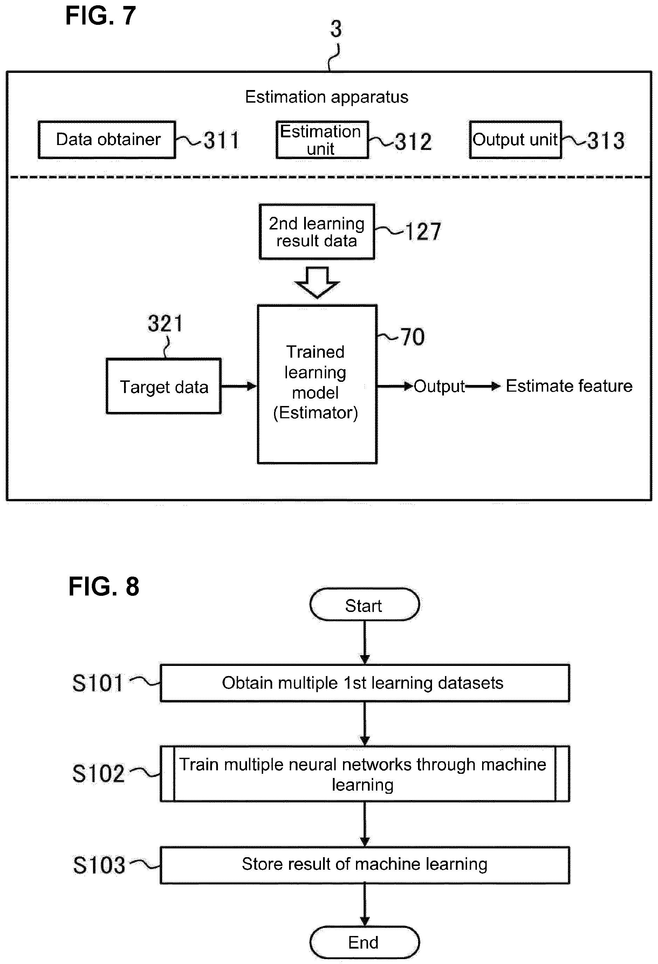

The learning program 81 causes the learning apparatus 1 to perform the information processing (FIGs. 8, 9, and 11) for the machine learning in each phase (described later). The learning program 81 includes a series of instructions for the information processing. The first data pool 85 accumulates datasets (first learning datasets 121 and second learning datasets 227) for machine learning. The first learning result data 125 is information about each trained neural network (50, 51) generated through the machine learning in the first phase. The second learning result data 127 is information about the trained learning model generated through the machine learning in the second phase. The learning result data (125, 127) results from executing the learning program 81. This will be described in detail later.

The communication interface 13 is, for example, a wired local area network (LAN) module or a wireless LAN module for wired or wireless communication through a network. The learning apparatus 1 uses the communication interface 13 to perform data communication through a network with other information processing devices (e.g., the data generation apparatus 2 and the estimation apparatus 3).

The input device 14 is, for example, a mouse or a keyboard. The output device 15 is, for example, a display and a speaker. An operator may operate the learning apparatus 1 through the input device 14 and the output device 15. The input device 14 and the output device 15 may be integrated into, for example, a touch panel display.

The drive 16 is, for example, a compact disc (CD) drive or a digital versatile disc (DVD) drive for reading a program stored in a storage medium 91. The type of drive 16 may be selected as appropriate for the type of storage medium 91. The learning program 81, the first data pool 85, or both may be stored in the storage medium 91.

The storage medium 91 stores programs or other information in an electrical, magnetic, optical, mechanical, or chemical manner to allow a computer or another device or machine to read the recorded programs or other information. The learning apparatus 1 may obtain the learning program 81, the first data pool 85, or both from the storage medium 91.

In FIG. 2, the storage medium 91 is a disc storage medium, such as a CD or a DVD. However, the storage medium 91 is not limited to a disc. One example of the storage medium other than a disc is a semiconductor memory such as a flash memory.

For the specific hardware configuration of the learning apparatus 1, components may be eliminated, substituted, or added as appropriate in each embodiment. For example, the controller 11 may include multiple hardware processors. The hardware processors may include a microprocessor, a field-programmable gate array (FPGA), a digital signal processor (DSP), or other processors. The storage 12 may be the RAM and the ROM included in the controller 11. At least one of the communication interface 13, the input device 14, the output device 15, or the drive 16 may be eliminated. The learning apparatus 1 may include multiple computers. In this case, each computer may have the same or a different hardware configuration. The learning apparatus 1 may be an information processing apparatus dedicated to an intended service, or may be a general-purpose server or a general-purpose personal computer (PC).

Data Generation Apparatus

The hardware configuration of the data generation apparatus 2 according to the present embodiment will now be described with reference to FIG. 3. FIG. 3 is a schematic diagram of the data generation apparatus 2 according to the present embodiment, showing its hardware configuration.

As shown in FIG. 3, the data generation apparatus 2 according to the present embodiment is a computer including a controller 21, a storage 22, a communication interface 23, an input device 24, an output device 25, and a drive 26 that are electrically connected to one another. The components from the controller 21 to the drive 26 in the data generation apparatus 2 according to the present embodiment may have the same structures as the components from the controller 11 to the drive 16 in the learning apparatus 1.

More specifically, the controller 21 includes, for example, a CPU as a hardware processor, a RAM, and a ROM, and performs various information processing operations based on programs and data. The storage 22 includes, for example, a hard disk drive or a solid state drive. In the present embodiment, the storage 22 stores various items of information including a data generation program 82, a second data pool 87, and the first learning result data 125.

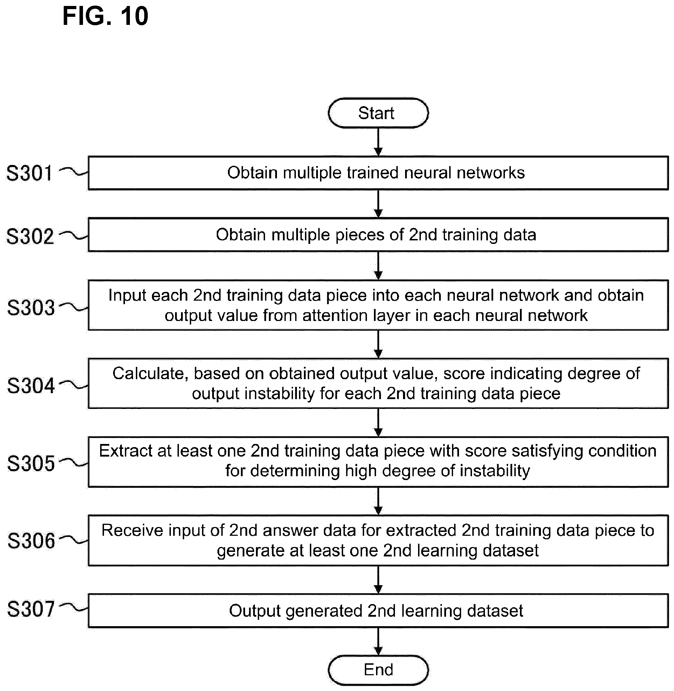

The data generation program 82 causes the data generation apparatus 2 to perform the information processing (FIG. 10) to generate at least one second learning dataset 227 (described later). The data generation program 82 includes a series of instructions for the information processing. The second data pool 87 accumulates second training data 221 unlabeled with answer data. This will be described in detail later.

The communication interface 23 is, for example, a wired LAN module or a wireless LAN module for wired or wireless communication through a network. The data generation apparatus 2 uses the communication interface 23 to perform data communication through a network with other information processing devices (e.g., the learning apparatus 1).

The input device 24 is, for example, a mouse or a keyboard. The output device 25 is, for example, a display or a speaker. An operator may operate the data generation apparatus 2 through the input device 24 and the output device 25. The input device 24 and the output device 25 may be integrated into, for example, a touch panel display.

The drive 26 is, for example, a CD drive or a DVD drive for reading a program stored in a storage medium 92. At least one of the data generation program 82, the second data pool 87, or the first learning result data 125 may be stored in the storage medium 92. The data generation apparatus 2 may obtain at least one of the data generation program 82, the second data pool 87, or the first learning result data 125 from the storage medium 92. The storage medium 92 may be a disk or other than a disk.

For the specific hardware configuration of the data generation apparatus 2, components may be eliminated, substituted, or added as appropriate in each embodiment. For example, the controller 21 may include multiple hardware processors. Each hardware processor may include a microprocessor, an FPGA, a DSP, or other processors. The storage 22 may be the RAM and the ROM included in the controller 21. At least one of the communication interface 23, the input device 24, the output device 25, or the drive 26 may be eliminated. The data generation apparatus 2 may include multiple computers. In this case, each computer may have the same or a different hardware configuration. The data generation apparatus 2 may be an information processing apparatus dedicated to an intended service, or may be a general-purpose server or a general-purpose PC.

Estimation Apparatus

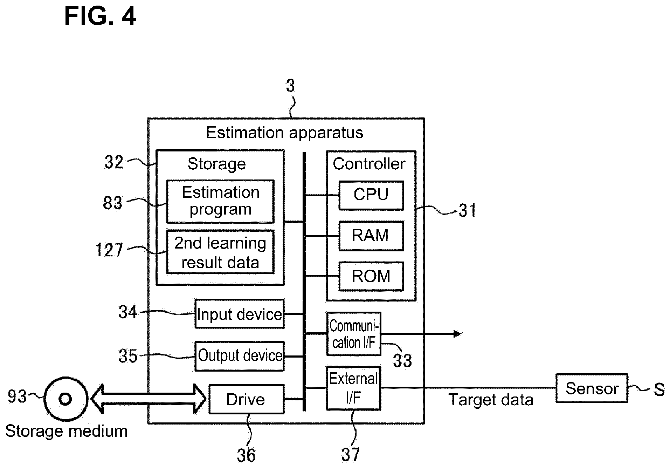

The hardware configuration of the estimation apparatus 3 in the present embodiment will now be described with reference to FIG. 4. FIG. 4 is a schematic diagram of the estimation apparatus 3 in the present embodiment, showing its hardware configuration.

As shown in FIG. 4, the estimation apparatus 3 in the present embodiment is a computer including a controller 31, a storage 32, a communication interface 33, an input device 34, an output device 35, a drive 36, and an external interface 37 that are electrically connected to one another. In FIG. 4, the external interface is abbreviated as an external I/F. The components from the controller 31 to the drive 36 in the estimation apparatus 3 may have the same structure as the components from the controller 11 to the drive 16 in the learning apparatus 1.

More specifically, the controller 31 includes, for example, a CPU as a hardware processor, a RAM, and a ROM, and performs various information processing operations based on programs and data. The storage 32 includes, for example, a hard disk drive or a solid state drive. The storage 32 stores various items of information including an estimation program 83 and the second learning result data 127.

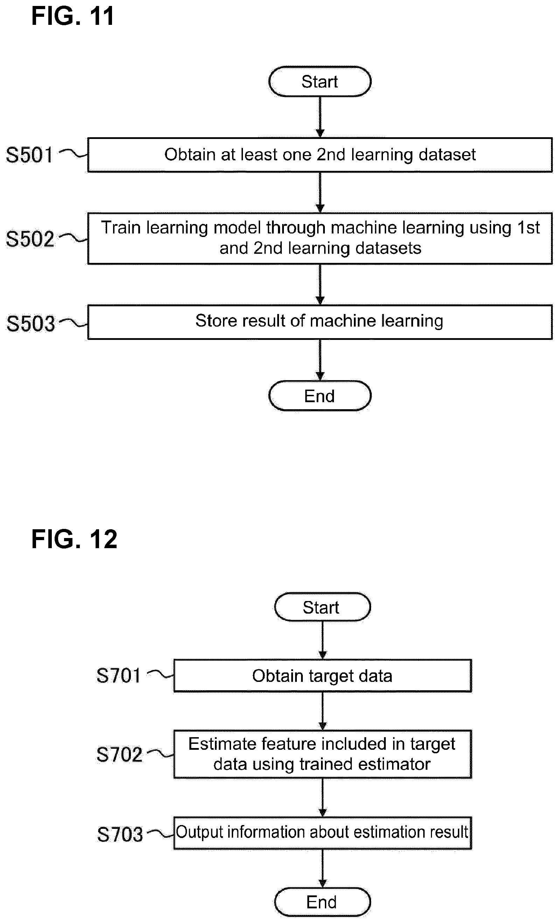

The estimation program 83 causes the estimation apparatus 3 to perform the information processing (FIG. 12) to estimate a feature included in target data using the generated trained learning model (described later). The estimation program 83 includes a series of instructions for the information processing. This will be described in detail later.

The communication interface 33 is, for example, a wired LAN module or a wireless LAN module for wired or wireless communication through a network. The estimation apparatus 3 uses the communication interface 33 to perform data communication through a network with other information processing devices (e.g., the learning apparatus 1).

The input device 34 is, for example, a mouse or a keyboard. The output device 35 is, for example, a display or a speaker. An operator may operate the estimation apparatus 3 through the input device 34 and the output device 35. The input device 34 and the output device 35 may be integrated into, for example, a touch panel display.

The drive 36 is, for example, a CD drive or a DVD drive for reading a program stored in a storage medium 93. The estimation program 83, the second learning result data 127, or both may be stored in the storage medium 93. The estimation apparatus 3 may obtain the estimation program 83, the second learning result data 127, or both from the storage medium 93. The storage medium 93 may be a disk or other than a disk.

The external interface 37 is an interface such as a universal serial bus (USB) port or a dedicated port for connection to an external device. The type and the number of external interfaces 37 may be selected as appropriate for the type and the number of external devices to be connected. In the present embodiment, the estimation apparatus 3 is connected to the sensor S through the external interface 37.

The sensor S is used to obtain target data to undergo an estimation task. The sensor S may be of any type and may be installed at any location appropriate for the estimation task. For example, the sensor S may be a camera to capture images of products on a production line for visual inspection of the products. The camera may be located as appropriate to monitor the products transported on the production line. The sensor S may include a communication interface. In this case, the estimation apparatus 3 may be connected to the sensor S through the communication interface 33, instead of through the external interface 37.

For the specific hardware configuration of the estimation apparatus 3, components may be eliminated, substituted, or added as appropriate in each embodiment. For example, the controller 31 may include multiple hardware processors. Each hardware processor may include a microprocessor, an FPGA, a DSP, or other processors. The storage 32 may be the RAM and the ROM included in the controller 31. At least one of the communication interface 33, the input device 34, the output device 35, the drive 36, or the external interface 37 may be eliminated. The estimation apparatus 3 may include multiple computers. In this case, each computer may have the same or a different hardware configuration. The estimation apparatus 3 may be an information processing apparatus dedicated to an intended service, or may be a general-purpose server or a general-purpose PC.

Software Configuration

Learning Apparatus

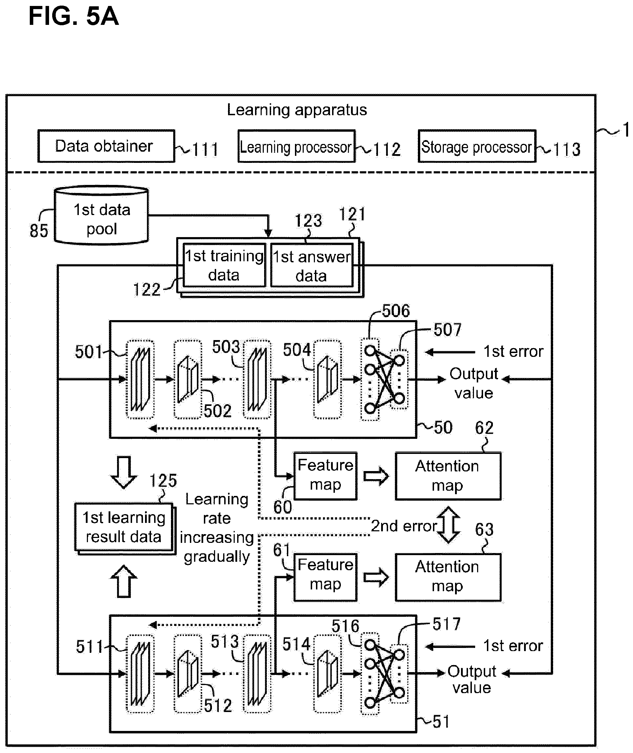

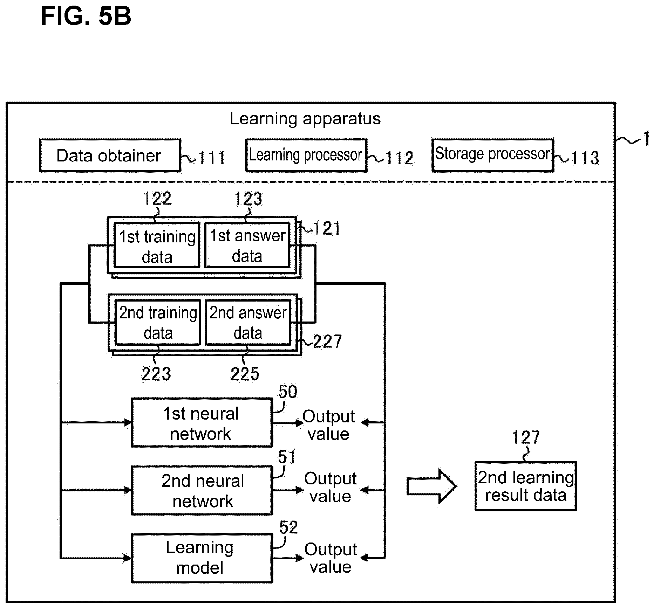

The software configuration of the learning apparatus 1 in the present embodiment will now be described with reference to FIGs. 5A and 5B. FIGs. 5A and 5B are schematic diagrams of the learning apparatus 1 in the present embodiment, showing its software configuration.

The controller 11 in the learning apparatus 1 loads the learning program 81 stored in the storage 12 into the RAM. The CPU in the controller 11 then interprets and executes the instructions in the learning program 81 loaded in the RAM to control each component. As shown in FIGs. 5A and 5B, the learning apparatus 1 in the present embodiment thus operates as a computer including a data obtainer 111, a learning processor 112, and a storage processor 113 as software modules. In other words, in the present embodiment, each software module in the learning apparatus 1 is implemented by the controller 11 (CPU).

First Phase

As shown in FIG. 5A, in the first phase, the data obtainer 111 obtains multiple first learning datasets 121 each including a pair of first training data 122 and first answer data 123 indicating a feature included in the first training data 122. The data obtainer 111 is an example of a first data obtainer in an aspect of the present invention. In the present embodiment, the learning datasets are accumulated in the first data pool 85. The data obtainer 111 obtains multiple first learning datasets 121 from the first data pool 85.

The learning processor 112 trains multiple neural networks through machine learning using the obtained multiple first learning datasets 121. In the present embodiment, the learning processor 112 trains the two neural networks (50, 51) through machine learning. Each neural network (50, 51) includes multiple layers between an input end and an output end of the neural network. In each neural network (50, 51), the layers include the output layer (507, 517) nearest the output end and the attention layer (503, 513) nearer the input end than the output layer (507, 517). The machine learning includes training the neural networks (50, 51) to output, in response to an input of the first training data 122 included in each first learning dataset 121 into each neural network (50, 51), values each fitting the first answer data 123 from the output layers (507, 517) and values fitting each other from the attention layers (503, 513).

The storage processor 113 generates, as the first learning result data 125, information about each trained neural network (50, 51) built through the machine learning. The storage processor 113 then stores the generated first learning result data 125 into a predetermined storage area. The predetermined storage area may be, for example, the RAM in the controller 11, the storage 12, the storage medium 91, an external storage, or a combination of these.

Neural Network

An example of each neural network (50, 51) will now be described. In the present embodiment, each neural network (50, 51) is a convolutional neural network.

A typical convolutional neural network includes a convolutional layer, a pooling layer, and a fully connected layer. The convolutional layer performs a convolutional computation on input data. The convolution computation corresponds to calculating a correlation between input data and a predetermined filter. For example, an input image undergoes image convolution that detects a grayscale pattern similar to the grayscale pattern of the filter. The convolutional layer includes neurons corresponding to the convolutional computation. The neurons are connected to part of the output area of the input layer or a layer before (nearer the input end than) the convolutional layer. The pooling layer performs a pooling process. An input data undergoes the pooling process that selectively discards information at positions highly responsive to the filter to achieve invariable response to slight positional changes of the features occurring in the data. For example, the pooling layer extracts the greatest value in the filter and deletes the other values. The fully connected layer includes one or more neurons to which all the neurons in the neighboring layer are connected.

In the example in FIG. 5A, each neural network (50, 51) includes multiple layers (501 to 507, 511 to 517) between the input end and the output end. The input layer (501, 511) is nearest the input end. The input layer (501, 511) is a convolutional layer. The output of the input layer (501, 511) is connected to the input of the pooling layer (502, 512). In this manner, convolutional layers and pooling layers may be arranged alternately. In another example, convolution layers may be arranged consecutively. Typically, a convolutional neural network includes a section including one or more convolutional layers and one or more pooling layers. The output from the section is input into the fully connected layer.

In the present embodiment, the attention layer (503, 513) serves an intermediate layer in the section including the convolutional layer and the pooling layer. The attention layer (503, 513) is a convolutional layer. The pooling layer (504, 514) is nearest an output end of the section. The output of the pooling layer (504, 514) is connected to the input of the fully connected layer (506, 516). In the example in FIG. 5A, each neural network includes two fully connected layers, including one nearest the output end being the output layer (507, 517).

The output layer (507, 517) may be in a format selected as appropriate for the type of estimation task. In one example, the neural network (50, 51) to learn a classification task may have the output layer (507, 517) that outputs the probability of each category. In this case, the output layer (507, 517) may include a neuron corresponding to each category. The output layer (507, 517) may include a softmax layer. In another example, the neural network (50, 51) to learn a regression task may have the output layer (507, 517) that outputs values to be regressed. In this case, the output layer (507, 517) may include neurons corresponding to the number of values to be regressed. In still another example, the neural network (50, 51) to learn segmentation may have the output layer (507, 517) that outputs the range for extraction (e.g., the center position and the number of pixels). In this case, the output layer (507, 517) may include neurons corresponding to the format indicating the range.

Each neural network (50, 51) may have any other architecture designed as appropriate in each embodiment. Each neural network (50, 51) may include layers other than those described above. For example, each neural network (50, 51) may include a normalization layer and a dropout layer. The neural networks (50, 51), each having the same architecture in the example in FIG. 5A, may have different architectures.

The layers (501 to 507, 511 to 517) in each neural network (50, 51) have computational parameters for computation. More specifically, the neurons in each layer are connected to the neurons in the neighboring layer as appropriate, with each connection having a preset weight (connection weight). Each neuron in each layer (501 to 507, 511 to 517) has a preset threshold. An output of each neuron is determined based on whether the sum of the product of each input and the corresponding weight exceeds the threshold. More specifically, the computation with each neural network (50, 51) includes determining, in response to an input of data into the input layer (501, 511), firing of each neuron included in each layer (501 to 507, 511 to 517) in the forward propagation direction, with the determination starting from the layer nearest the input end. The connection weight between neurons and the threshold of each neuron included in each layer are examples of the computational parameters.

Training each neural network (50, 51) may include iteratively adjusting, in response to an input of the first training data 122 included in each first learning dataset 121 into each input layer (501, 511), the computational parameters in each neural network (50, 51) to reduce a first error between the output value from each output layer (507, 517) and the first answer data 123 and to reduce a second error between the output values from the attention layers (503, 513).

In the iterative adjustment, the computational parameters are updated by the degree adjusted based on the learning rate. The learning rate for each error may be set as appropriate. The learning rate may be a preset value or may be specified by an operator. For example, the learning rate may be set constant for the first error between the output value from each output layer (507, 517) and the first answer data 123. The learning rate set for the second error between the output values from the attention layers (503, 513) may increase in response to every adjustment of the computational parameters.

The pooling layers (502, 504, 512, 514) have no computational parameter adjustable through learning. In this manner, the neural networks (50, 51) may include nonadjustable computational parameters.

The output value from the convolutional layer is referred to as a feature map. In the present embodiment, the output values from the attention layers (503, 513) in the neural networks (50, 51) fitting each other may indicate that the attention maps (62, 63) derived from the feature maps (60, 61) output from the convolutional attention layers (503, 513) match each other. In other words, the second error may be calculated based on a mismatch between the attention maps (62, 63).

Second Phase

As shown in FIG. 5B, in the second phase, the data obtainer 111 obtains the second learning dataset(s) 227 generated by the data generation apparatus 2. The learning processor 112 may retrain each neural network (50, 51) through machine learning using multiple first learning datasets 121 and the second learning dataset(s) 227. The learning processor 112 may train a learning model 52 different from the neural networks (50, 51) through supervised learning using the multiple first learning datasets 121 and the second learning dataset(s) 227. Supervised learning is one type of machine learning. In supervised learning, the learning model 52 is trained to output, in response to an input of training data (122, 223), a value that fits the corresponding answer data (123, 225). The learning model 52 may be of any type that can be trained through supervised learning and may be selected as appropriate in each embodiment. For example, the learning model 52 may be a neural network, a support vector machine, a linear regression model, or a decision tree model.

A trained learning model is built through the machine learning described above for use in performing a predetermined estimation task. The trained learning model is at least one of the neural networks (50, 51) or the learning model 52. The storage processor 113 generates information about the trained learning model as the second learning result data 127. The storage processor 113 then stores the generated second learning result data 127 into a predetermined storage area. The predetermined storage area may be, for example, the RAM in the controller 11, the storage 12, the storage medium 91, an external storage, or a combination of these. The second learning result data 127 may be in the same storage as the first learning result data 125 or may be in a different storage.

Data Generation Apparatus

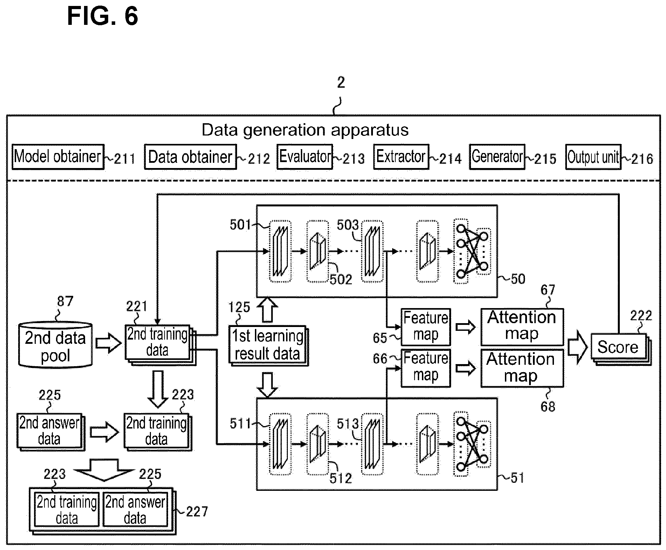

The software configuration of the data generation apparatus 2 according to the present embodiment will now be described with reference to FIG. 6. FIG. 6 is a schematic diagram of the data generation apparatus 2 according to the present embodiment, showing its software configuration.

The controller 21 in the data generation apparatus 2 loads the data generation program 82 stored in the storage 22 into the RAM. The CPU in the controller 21 then interprets and executes the instructions included in the data generation program 82 loaded in the RAM to control each component. As shown in FIG. 6, the data generation apparatus 2 according to the present embodiment thus operates as a computer including a model obtainer 211, a data obtainer 212, an evaluator 213, an extractor 214, a generator 215, and an output unit 216 as software modules. In other words, in the present embodiment, each software module in the data generation apparatus 2 is implemented by the controller 21 (CPU) in the same manner as in the learning apparatus 1.

The model obtainer 211 obtains multiple neural networks trained in the first phase. In the present embodiment, the model obtainer 211 obtains the first learning result data 125 to obtain the two trained neural networks (50, 51). The data obtainer 212 obtains multiple pieces of second training data 221. The data obtainer 212 is an example of a second data obtainer in an aspect of the present invention. In the present embodiment, the second data pool 87 accumulates training data unlabeled with answer data. The data obtainer 212 obtains multiple pieces of second training data 221 from the second data pool 87.

The evaluator 213 stores the first learning result data 125 to include the trained neural networks (50, 51). The evaluator 213 refers to the first learning result data 125 and sets the trained neural networks (50, 51). The evaluator 213 inputs each piece of second training data 221 into each trained neural network (50, 51) to obtain an output value from the attention layer (503, 513) in each neural network (50, 51). The evaluator 213 calculates, based on the output value obtained from the attention layer (503, 513), the score 222 indicating the degree of output instability of each neural network (50, 51) for each piece of second training data 221.

In the present embodiment, each neural network (50, 51) is a convolutional neural network, and each attention layer (503, 513) is a convolutional layer. The evaluator 213 may obtain a feature map (65, 66) as the output value from the attention layer (503, 513). The evaluator 213 may calculate an attention map (67, 68) using the feature map (65, 66) and calculate, based on the calculated attention map (67, 68), the score 222 for each piece of second training data 221.

The extractor 214 extracts, from multiple pieces of second training data 221, at least one piece of second training data 223 with the score 222 satisfying a condition for determining a high degree of instability. The generator 215 receives, for the extracted piece or each of the extracted pieces of second training data 223, an input of the second answer data 225 indicating a feature included in the piece(s) of second training data 223 (more specifically, a correct answer to the piece(s) of second training data 223 in a predetermined estimation task). The generator 215 then associates the input second answer data 225 with a corresponding piece of second training data 223 to generate at least one second learning dataset 227. Each of the generated second learning datasets 227 includes a pair of second training data 223 and second answer data 225.

The output unit 216 outputs the generated second learning dataset(s) 227 in a manner usable for training a learning model through supervised learning. In one example, the output unit 216 may store the second learning datasets 227 into the first data pool 85 in the output process. In this manner, the generated second learning datasets 227 are stored and are usable for training a learning model through supervised learning.

Estimation Apparatus

The software configuration of the estimation apparatus 3 in the present embodiment will now be described with reference to FIG. 7. FIG. 7 is a schematic diagram of the estimation apparatus 3 in the present embodiment, showing its software configuration.

The controller 31 in the estimation apparatus 3 loads the estimation program 83 stored in the storage 32 into the RAM. The CPU in the controller 31 then interprets and executes the instructions included in the estimation program 83 loaded in the RAM to control each component. As shown in FIG. 7, the estimation apparatus 3 in the present embodiment is thus implemented as a computer including a data obtainer 311, an estimation unit 312, and an output unit 313 as software modules. In other words, in the present embodiment, each software module in the estimation apparatus 3 is implemented by the controller 31 (CPU) in the same manner as in the learning apparatus 1.

The data obtainer 311 obtains target data 321. The estimation unit 312 stores the second learning result data 127 to include a trained learning model 70 as an estimator. The trained learning model 70 may be at least one of the neural networks (50, 51) or learning model 52 trained through the machine learning in the second phase. The estimation unit 312 refers to the second learning result data 127 to set the trained learning model 70.

The estimation unit 312 inputs obtained target data 321 into the trained learning model 70 and performs computation with the trained learning model 70. The estimation unit 312 obtains, from the trained learning model 70, an output value corresponding to an estimation result of a feature included in the target data 321. In other words, the estimation unit 312 performs an estimation task on the target data 321 using the trained learning model 70 through the computation. The output unit 313 outputs information about the estimation result.

The estimation apparatus 3 may use a trained learning model other than the trained learning model built through the machine learning in the second phase, and may use at least one of the neural networks (50, 51) built through the machine learning in the first phase. In this case, the estimation unit 312 stores the first learning result data 125 to include at least one of the trained neural networks (50, 51). The estimation unit 312 may use at least one of the trained neural networks (50, 51) to perform an estimation task on the target data 321.

Others

The software modules for the learning apparatus 1, the data generation apparatus 2, and the estimation apparatus 3 will be described in detail later in the operation examples. In the present embodiment, the software modules for the learning apparatus 1, the data generation apparatus 2, and the estimation apparatus 3 are implemented by a general-purpose CPU. However, some or all of the software modules may be implemented by one or more dedicated processors. For the software configurations of the learning apparatus 1, the data generation apparatus 2, and the estimation apparatus 3, software modules may be eliminated, substituted, or added as appropriate in each embodiment.

3. Operation Examples

(A) Machine Learning in First Phase

An operation example of the learning apparatus 1 in the first phase in the present embodiment will now be described with reference to FIG. 8. FIG. 8 is a flowchart showing the machine learning procedure in the first phase performed by the learning apparatus 1 in the present embodiment. The procedure described below is an example of a learning method. The procedure described below is a mere example, and each of its processes may be modified in any possible manner. In the procedure described below, steps may be eliminated, substituted, or added as appropriate in each embodiment.

Step S101

In step S101, the controller 11 operates as the data obtainer 111 to obtain multiple first learning datasets 121. Each first learning dataset 121 includes a pair of first training data 122 and first answer data 123 indicating a feature included in the first training data 122. In the present embodiment, the storage 12 stores the first data pool 85 accumulating pre-generated learning datasets. The controller 11 obtains multiple first learning datasets 121 from the first data pool 85 in the storage 12.
The first data pool 85 may be stored in a storage other than the storage 12 selected as appropriate in each embodiment. The first data pool 85 may be stored in, for example, the storage medium 91 or an external storage. The external storage may be connected to the learning apparatus 1. The external storage may also be, for example, a data server such as a network attached storage (NAS). The first data pool 85 may also be stored in another computer. In this case, the controller 11 may access the first data pool 85 through, for example, the communication interface 13 or the drive 16 and obtain multiple first learning datasets 121.
The first learning datasets 121 may be obtained from a source other than the first data pool 85. For example, the controller 11 may generate first learning datasets 121 or obtain first learning datasets 121 generated by another computer. The controller 11 may obtain multiple first learning datasets 121 in at least one of the above manners.
Each first learning dataset 121 may be generated in a manner selected as appropriate for the type of first training data 122 and the type of estimation task to be learned by the learning model (more specifically, information indicated by the first answer data 123). In one example, the first training data 122 may be sensing data generated through monitoring performed by a sensor of the same type as the sensor S under various conditions. The monitoring target may be selected as appropriate for the estimation task to be learned by the learning model. Each piece of first training data 122 is associated with first answer data 123 indicating a feature included in the piece of first training data 122. Each first learning dataset 121 is generated in this manner.
Each first learning dataset 121 may be generated automatically through a computer operation or manually through an operator operation. The first learning dataset 121 may be generated by the learning apparatus 1 or by a computer other than the learning apparatus 1. When the learning apparatus 1 generates each first learning dataset 121, the controller 11 may perform the series of processes described above automatically or in response to a manual operation performed on the input device 14 by an operator to obtain multiple first learning datasets 121. When another computer generates each first learning dataset 121, the controller 11 may obtain multiple first learning datasets 121 generated by the other computer through, for example, a network or the storage medium 91. The other computer may generate multiple first learning datasets 121 by performing the series of processes automatically or in response to a manual operation performed by an operator. Some of the first learning datasets 121 may be generated by the learning apparatus 1, and the other first learning datasets 121 may be generated by one or more other computers.

Any number of first learning datasets 121 may be obtained as appropriate in each embodiment. After obtaining multiple first learning datasets 121, the controller 11 advances the processing to subsequent step S102.

Step S102

In step S102, the controller 11 operates as the learning processor 112 to train multiple neural networks through machine learning using the obtained multiple first learning datasets 121. In the present embodiment, the controller 11 trains the two neural networks (50, 51) through machine learning.

Each neural network (50, 51) includes multiple layers (501 to 507, 511 to 517) between the input end and the output end. The layers (501 to 507, 511 to 517) include the output layer (507, 517) nearest the output end and the attention layer (503, 513) nearer the input end than the output layer (507, 517). The controller 11 uses the first training data 122 in each first learning dataset 121 as input data. The controller 11 uses the first answer data 123 as correct answer data for the outputs from the output layers (507, 517). The controller 11 uses matching between the outputs from the attention layers (503, 513) as correct answer data for the outputs from the attention layers (503, 513). The controller 11 performs a learning process with each neural network (50, 51) based on these data items. The learning process may include, for example, batch gradient descent, stochastic gradient descent, and mini-batch gradient descent.

Machine Learning

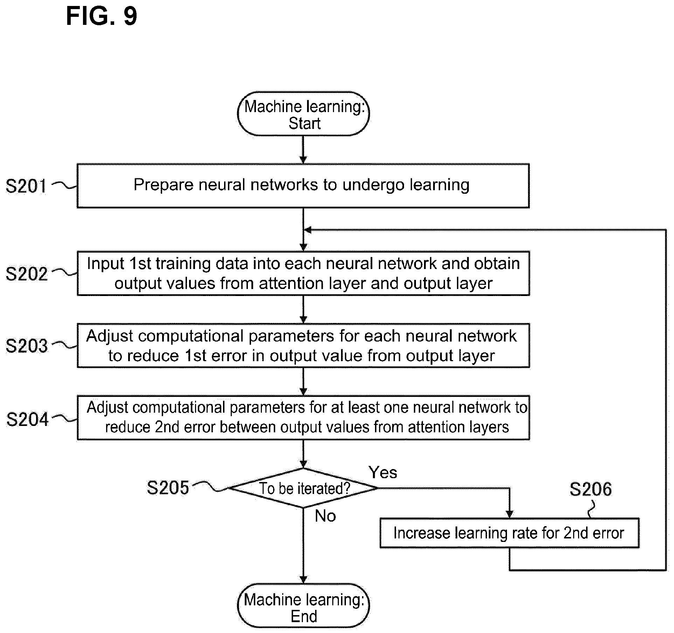

An example machine learning process in step S102 will now be described in detail with reference to FIG. 9. FIG. 9 is a flowchart showing a procedure in the machine learning used by the learning apparatus 1 in the present embodiment. The process in step S102 in the present embodiment includes the processes in steps S201 to S206 described below. The procedure described below is a mere example, and each of its processes may be modified in any possible manner. In the procedure described below, steps may be eliminated, substituted, or added as appropriate in each embodiment.

Step S201

In step S201, the controller 11 prepares the neural networks (50, 51) to undergo machine learning.

The architecture of each neural network (50, 51) (e.g., the number of layers, the type of each layer, the number of neurons in each layer, the connections between neurons in adjacent layers) to be prepared, the default values of the connection weights between neurons, and the default threshold of each neuron may be preset using a template or may be input by an operator. The template may include information about the architecture of each neural network and information about the initial values of the computational parameters of each neural network.

The attention layers may be prespecified in the template or may be specified by an operator. The controller 11 may identify the layers having a common output format in the prepared neural networks (50, 51) and determine the attention layers from the identified layers as appropriate. The criteria for determining the attention layers may be set as appropriate. The criteria for determining the attention layers may specify, for example, the number of outputs from the layer, the type of layer, and other attributes. The controller 11 may determine the attention layers from layers identified in accordance with the set criteria.

For relearning, the controller 11 may prepare the neural networks (50, 51) to be trained based on learning result data obtained from past machine learning.

After preparing the neural networks (50, 51) to be trained, the controller 11 advances the processing to subsequent step S202.

Step S202

In step S202, the controller 11 inputs the first training data 122 included in each first learning dataset 121 into each input layer (501, 511) and performs computation with each neural network (50, 51). More specifically, the controller 11 determines firing of each neuron included in each layer (501 to 507, 511 to 517), with the determination starting from the layer nearest the input end. The result of the computation allows the controller 11 to obtain, from each output layer (507, 517), the output value corresponding to the result of an estimation task performed on the first training data 122. In the computation process, the controller 11 also performs computation from the input layer (501, 511) to the attention layer (503, 513) to obtain the output value from each attention layer (503, 513). After obtaining the output values from the attention layers (503, 513) and output values from the output layers (507, 517), the controller 11 advances the processing to subsequent step S203.

Step S203

In step S203, the controller 11 calculates, for each first learning dataset 121, the first error between the output value from each output layer (507, 517) and the first answer data 123. The first error may be calculated by a known error function including mean square error and cross entropy error. Error functions are used to evaluate the difference between the output and the correct answer data. A larger difference indicates a larger loss function value. The controller 11 calculates the gradient of the first error and performs backpropagation on the calculated gradient to calculate errors in computational parameters (e.g., connection weights between neurons and the threshold of each neuron) included in each layer (501 to 507, 511 to 517). The controller 11 then updates the computational parameters based on the calculated errors. In this manner, the controller 11 adjusts the computational parameters for each neural network (50, 51) to reduce the first error between the output value output from each output layer (507, 517) and the first answer data 123.

For the first error, the computational parameters are updated by the degree adjusted based on the learning rate. The learning rate determines the degree of updates to the computational parameters in machine learning. A higher learning rate indicates a larger update in each computational parameter, whereas a lower learning rate indicates a smaller update in each computational parameter. The controller 11 updates the computational parameters with values obtained by multiplying the learning rate by each error. The learning rate for the first error may be determined as appropriate. The initial learning rate for the first error may be specified by an operator or may be a preset value. After completing adjustment of the computational parameters for each neural network (50, 51) based on the first error, the controller 11 advances the processing to subsequent step S204.

Step S204

In step S204, the controller 11 calculates, for each first learning dataset 121, the second error between the output values output from the attention layers (503, 513). The second error may be calculated by a known error function including mean square error in accordance with the output format of the attention layers (503, 513).

In the present embodiment, the attention layers (503, 513) are convolutional layers, and the controller 11 may obtain the feature maps (60, 61) as the output values from the attention layers (503, 513) in step S202. The controller 11 calculates the attention maps (62, 63) from the feature maps (60, 61). The attention maps may be calculated from the feature maps in any manner selected as appropriate in each embodiment.

For example, the controller 11 may calculate each attention map (62, 63) by summing the absolute values of the elements in the feature map (60, 61) in the channel direction. For image data, each element in the feature map (60, 61) corresponds to a pixel. The number of channels in the feature map (60, 61) corresponds to the number of filters in the convolutional layers and the number of channels of the input data. For example, the controller 11 may calculate each attention map (62, 63) by summing the n-th powers of the absolute values of the elements in the feature map (60, 61) in the channel direction, where n is any number. For example, the controller 11 may calculate each attention map (62, 63) by calculating the n-th power of the absolute value of each element in the feature map (60, 61) and extracting the maximum value from the calculated n-th power values in the channel direction. Any other known manner may be used to calculate the attention maps from the feature maps.

The controller 11 may then calculate the second error between the output values of the attention layers (503, 513) by calculating the mean squared error of the calculated attention maps (62, 63). The second error may be calculated in any other manner determined as appropriate in each embodiment. For example, the controller 11 may calculate the second error directly from the feature maps (60, 61).

Subsequently, the controller 11 calculates the gradient of the second error and performs backpropagation on the calculated gradient from the attention layers (503, 513) toward the input layers (501, 511) to calculate errors in the computational parameters included in the layers from the input layers (501, 511) to the attention layers (503, 513). The controller 11 then updates the computational parameters included in layers from the input layers (501, 511) to the attention layers (503, 513) based on the calculated errors. In this manner, the controller 11 adjusts the computational parameters for each neural network (50, 51) to reduce the second error between the output values from the attention layers (503, 513) (in other words, in a direction in which the attention maps (62, 63) match each other).

The computational parameters may be adjusted using the second error in any other manner or on one of the neural networks (50, 51) alone. For example, in step S204, the controller 11 may use one of the two neural networks (50, 51) as a reference and adjust the computational parameters for the other neural network alone. In other words, in step S204, the controller 11 adjusts the computational parameters included in the layers in at least one of the neural networks (50, 51) from the input layer to the attention layer. When three or more neural networks are to undergo the machine learning process, the controller 11 may adjust the computational parameters for all the neural networks, or may use one of the neural networks as a reference and adjust the computational parameters for the other neural networks.

For the second error, the computational parameters are updated by the degree adjusted based on the learning rate, in the same manner as for the first error. The learning rate for the second error may be determined as appropriate.

The learning rate for the second error may be specified by an operator or may be a preset value. After completing adjustment of the computational parameters based on the second error, the controller 11 advances the processing to subsequent step S205.

Steps S205 and S206

In step S205, the controller 11 determines whether to iterate the machine learning process (more specifically, iterate the adjustment of the computational parameters for each neural network (50, 51)).

The criteria for determining whether to iterate the process may be set as appropriate. For example, the machine learning may be iterated by a prescribed number of times, which may be determined as appropriate. The prescribed number of times may be a preset value or may be specified by an operator. In this case, the controller 11 determines whether the count for the series of processes from step S202 to step S204 performed has reached the prescribed number of times. When the count has yet to reach the prescribed number of times, the controller 11 determines to iterate the machine learning process. When the count has reached the prescribed number of times, the controller 11 determines to stop iterating the machine learning process.

In another example, the controller 11 may iterate the machine learning process until each error decreases to a value less than or equal to a threshold. In this case, the controller 11 determines to iterate the machine learning process when each error is larger than the threshold value. When each error is equal to or less than the threshold, the controller 11 determines to stop iterating the machine learning process. The threshold may be set as appropriate. The threshold may be a preset value or may be specified by an operator.

When determining to iterate the machine learning process, the controller 11 advances the processing to subsequent step S206. When determining to stop iterating the machine learning process, the controller 11 ends the machine learning process.

In step S206, the controller 11 increases the learning rate for the second error. The amount of increase in the learning rate may be determined as appropriate. For example, the controller 11 may add a predetermined value to the current learning rate to increase the learning rate for the second error. For example, the controller 11 may determine the learning rate by using a function that defines the relationship between the count of the machine learning process and the learning rate to have a greater value in response to a greater count. The amount of increase in the learning rate may be set smaller in response to a greater count. After changing the learning rate for the second error, the controller 11 iterates the process from step S202. In this manner, in the present embodiment, the learning rate for the second error increases in response to every adjustment of the computational parameters.

In the early stage of the machine learning, the output values from the attention layers (503, 513) in the neural networks (50, 51) may differ greatly. In step S206, the controller 11 gradually increases the learning rate for the second error to enable appropriate convergence in the learning for fitting the output values from the attention layers (503, 513) in the neural networks (50, 51) with each other.

The learning rate for the second error may be set in any other manner selected as appropriate in each embodiment. For example, the learning rate for the second error may be set to a constant rate. In this case, step S206 may be eliminated, and the controller 11 may iterate the process from step S202 without changing the learning rate for the second error.

The learning rate for the first error may be set as appropriate. Similarly to the learning rate for the second error, the controller 11 may increase the learning rate for the first error in response to every adjustment of the computational parameters. In this case, the controller 11 iterates the process from step S202 after increasing the learning rate for the first error in the same manner as in step S206. In another example, the learning rate for the first error may be set to a constant rate. In this case, the controller 11 iterates the process from step S202 at the same constant learning rate for the first error.

As described above, the controller 11 ends the machine learning process after iterating the processes in steps S203 and S204. As the process in step S203 is iterated, each neural network (50, 51) is trained to output, in response to an input of the first training data 122 included in each first learning dataset 121, a value that fits the first answer data 123 from the output layer (507, 517). As the process in step S204 is iterated, the neural networks (50, 51) are trained to output values that fit each other from the attention layers (503, 513). In the present embodiment, the neural networks (50, 51) are trained to output, from the attention layers (503, 513), the feature maps (60, 61) that derive the attention maps (62, 63) matching each other. The matching may include matching with an error less than or equal to a threshold. After completing the machine learning process, the controller 11 advances the processing to subsequent step S103.

The machine learning process may be performed in any other manner modified as appropriate in each embodiment. For example, steps S203 and S204 may be performed in the opposite order. Steps S203 and S204 may be performed in parallel. Instead of or in addition to iteratively and consecutively performing the processes in step S203 and step S204 as described above, the controller 11 may iterate the process in step S203 alone or the process in step S204 alone.

Step S103

Referring back to FIG. 8, in step S103, the controller 11 operates as the storage processor 113 and generates information about the trained neural networks (50, 51) built through the machine learning as the first learning result data 125. The first learning result data 125 allows reproduction of the trained neural networks (50, 51). For example, the first learning result data 125 may include information indicating the architecture and the computational parameters of each neural network (50, 51). The controller 11 stores the generated first learning result data 125 into a predetermined storage area.

The predetermined storage area may be, for example, the RAM in the controller 11, the storage 12, the storage medium 91, an external storage, or a combination of these. The external storage may be, for example, a data server such as a NAS. In this case, the controller 11 may use the communication interface 13 to store the first learning result data 125 into a data server through a network. The external storage may be connected to the learning apparatus 1. After storing the first learning result data 125, the controller 11 ends the series of machine learning processes in the first phase.

(B) Generating Learning Datasets

An operation example of the data generation apparatus 2 according to the present embodiment will now be described with reference to FIG. 10. FIG. 10 is a flowchart showing the procedure for generating learning datasets performed by the data generation apparatus 2 according to the present embodiment. The procedure described below is an example of a data generation method. The procedure described below is a mere example, and each of its processes may be modified in any possible manner. In the procedure described below, steps may be eliminated, substituted, or added as appropriate in each embodiment.

Step S301

In step S301, the controller 21 operates as the model obtainer 211 and obtains multiple neural networks trained in the first phase. In the present embodiment, the controller 21 obtains the first learning result data 125 to obtain the two trained neural networks (50, 51).

The first learning result data 125 generated by the learning apparatus 1 may be provided to the data generation apparatus 2 at an appropriate time. For example, the controller 11 in the learning apparatus 1 may transfer the first learning result data 125 to the data generation apparatus 2 in step S103 or in a step separate from step S103. The controller 21 receiving the transferred data may obtain the first learning result data 125. In another example, the controller 21 may use the communication interface 23 to access the learning apparatus 1 or a data server through a network and obtain the first learning result data 125. In still another example, the controller 21 may obtain the first learning result data 125 through the storage medium 92. Before step S301, the first learning result data 125 may be prestored in the storage 22 in any of the above obtaining processes. In this case, the controller 21 may obtain the first learning result data 125 from the storage 22. After obtaining the first learning result data 125, the controller 21 advances the processing to subsequent step S302.

The first learning result data 125 may be preinstalled in the data generation apparatus 2. In this case, step S301 may be eliminated. The model obtainer 211 may also be eliminated from the software configuration of the data generation apparatus 2.

Step S302

In step S302, the controller 21 operates as the data obtainer 212 to obtain multiple pieces of second training data 221. The second training data 221 is of the same type as the first training data 122. In the present embodiment, the storage 22 stores the second data pool 87 accumulating training data unlabeled with answer data. The controller 21 obtains multiple pieces of second training data 221 from the second data pool 87 in the storage 22.

The second data pool 87 may be stored in any storage other than the storage 22 selected as appropriate in each embodiment. The second data pool 87 may be stored in, for example, the storage medium 92 or an external storage. The external storage may be connected to the data generation apparatus 2. The external storage may be, for example, a data server such as a NAS. The second data pool 87 may also be stored in another computer. In this case, the controller 21 may access the second data pool 87 through, for example, the communication interface 23 or the drive 26 and obtain multiple pieces of second training data 221.

The second training data 221 may be obtained from a source other than the second data pool 87. For example, the controller 21 may generate second training data 221. The controller 21 may obtain second training data 221 generated by another computer. In this case, the controller 21 may obtain the second training data 221 generated by the other computer through, for example, a network or the storage medium 92. The controller 21 may obtain multiple pieces of second training data 221 in at least one of the above manners.

The second training data 221 may be generated in the same manner as the first training data 122. The second training data 221 may be generated automatically through a computer operation or manually through an operator operation. Some of the multiple pieces of second training data 221 may be generated by the data generation apparatus 2, and the other pieces may be generated by another computer.

The number of pieces of second training data 221 to be obtained is not limited and may be selected as appropriate in each embodiment. After obtaining multiple pieces of second training data 221, the controller 21 advances the processing to subsequent step S303.

Step S303

In step S303, the controller 21 operates as the evaluator 213 and refers to the first learning result data 125 to set the trained neural networks (50, 51). The controller 21 then inputs each piece of second training data 221 into the input layer (501, 511) in each trained neural network (50, 51) and performs computation up to the attention layer (503, 513) in each neural network (50, 51). More specifically, the controller 21 inputs each piece of second training data 221 into the input layer (501, 511) and determines firing of each neuron included in each layer from the input layer (501, 511) to the attention layer (503, 513), with the determination starting from the layer nearest the input end. In this manner, the controller 21 obtains an output value from the attention layer (503, 513) in each neural network (50, 51). After obtaining the output value from the attention layer (503, 513), the controller 21 advances the processing to subsequent step S304.

Step S304

In step S304, the controller 21 operate as the evaluator 213 and calculates, based on the obtained output value, the score 222 indicating the degree of output instability of each neural network (50, 51) for each piece of second training data 221.

The relationship between the output value from the attention layer (503, 513) and the score 222 may be described mathematically using an acquisition function. The acquisition function may be defined as appropriate to have a greater score 222 calculated to indicate a higher degree of instability in response to a greater variance in the output values from the attention layers (503, 513). The controller 21 may input the output value obtained from the attention layer (503, 513) into the acquisition function to calculate the score 222 for each piece of second training data 221.

In the present embodiment, the attention layers (503, 513) are convolutional layers, and the output values from the attention layers (503, 513) are obtained as the feature maps (65, 66). The controller 21 calculates the attention maps (67, 68) from the feature maps (65, 66). The attention maps (67, 68) may be calculated in the same manner as the attention maps (62, 63).

The controller 21 then normalizes each attention map (67, 68) to have the sum total of all the elements being 1. The normalized attention maps (67, 68) have the same characteristics as the output from a softmax function. The controller 21 may thus apply the acquisition function used for the output of the softmax function to the normalized attention maps (67, 68). For example, the controller 21 may calculate any of H, I, and V in Formulas 1 to 3 below as the score 222.

$$H = -\sum_i \left(\frac{1}{T}\sum_t p(s = i|x, w_t)\right) \cdot log\left(\frac{1}{T}\sum_t p(s = i|x, w_t)\right) \qquad \text{Formula 1}$$

$$I = H - \frac{1}{T}\sum_t \sum_i -p(s = i|x, w_t) \cdot log\big(p(s = i|x, w_t)\big) \qquad \text{Formula 2}$$

$$V = \frac{1}{S}\sum_i \frac{1}{T}\sum_t \big(p(s = i|x, w_t) - \bar{p}(s = i)\big)^2 \qquad \text{Formula 3}$$

In the formulas, s is each element in the attention map, i is the value of each element in the attention map, $p(s = i | x, w_t)$ is the probability of each element in the attention map being the value i, x is input data (specifically, second training data 221), $w_t$ is each neural network, S is the number of elements in the attention map, t is the index of the neural network, T is the number of neural networks (two in the present embodiment), and the overline indicates that the value is an average. The score 222 may be calculated in any other manner determined as appropriate in each embodiment. After calculating the score 222 for each piece of second training data 221, the controller 21 advances the processing to subsequent step S305.

Step S305

In step S305, the controller 21 operates as the extractor 214 and extracts, from multiple pieces of second training data 221, at least one piece of second training data 223 with the score 222 satisfying a condition for determining a high degree of instability.

The second training data 223 may be extracted on any condition set as appropriate in each embodiment. For example, the controller 21 may extract, from multiple pieces of second training data 221, any number of pieces of second training data 223 in order of higher instability. In this case, the number of data pieces extracted may be a preset value or may be specified by an operator. For example, the controller 21 may compare the score 222 with a threshold and extract, from multiple pieces of second training data 221, at least one piece of second training data 223 with the degree of instability exceeding the threshold. In this case, the threshold may be a preset value or may be specified by an operator. After extracting at least one piece of second training data 223, the controller 21 advances the processing to subsequent step S306.

Step S306

In step S306, the controller 21 operates as the generator 215 and receives, for the extracted piece or each of the extracted pieces of second training data 223, an input of the second answer data 225 indicating a feature included in the piece(s) of second training data 223 (more specifically, a correct answer to the piece(s) of second training data 223 in a predetermined estimation task). The controller 21 then associates the input second answer data 225 with a corresponding piece of second training data 223. In this manner, the controller 21 generates at least one second learning dataset 227 each including a pair of second training data 223 and second answer data 225.

The input of the second answer data 225 may be received in any manner set as appropriate in each embodiment. For example, the controller 21 may receive an input from an operator through the input device 24. For example, the controller 21 may receive an input of a result of estimation performed by any estimator that performs the same type of estimation tasks on the same type of data as the second training data 223. In other words, the controller 21 may use this estimator to obtain the result of a predetermined estimation task performed on the second training data 223 as the second answer data 225. The estimator may be of any type selected as appropriate in each embodiment. The estimator may be similar to, for example, the trained learning model 70. After generating the second learning dataset(s) 227, the controller 21 advances the processing to subsequent step S307.

Step S307

In step S307, the controller 21 operates as the output unit 216 and outputs the generated second learning dataset(s) 227 in a manner usable for training a learning model through supervised learning.

The dataset may be output in any manner selected as appropriate in each embodiment. In one example, the controller 21 may store the generated second learning dataset 227 into the first data pool 85 in the output process. In this manner, the generated second learning dataset 227 is stored in a manner usable for training a learning model through supervised learning performed by the learning apparatus 1. In another example, the controller 21 may transmit, in the output process, the generated second learning dataset 227 to a computer that trains a learning model through supervised learning. In still another example, the controller 21 may store the generated second learning dataset 227 into a predetermined storage area in a manner obtainable by a computer that trains a learning model through supervised learning. The predetermined storage area may be, for example, the RAM in the controller 21, the storage 22, the storage medium 92, an external storage, or a combination of these. The external storage may be, for example, a data server such as a NAS or may be connected to the data generation apparatus 2. After outputting the generated second learning dataset(s) 227, the controller 21 ends the series of processes for generating the learning datasets.

(C) Machine Learning in Second Phase

An operation example of the learning apparatus 1 in the second phase according to the present embodiment will now be described with reference to FIG. 11. FIG. 11 is a flowchart showing the machine learning procedure in the second phase performed by the learning apparatus 1 according to the present embodiment. The procedure described below is an example of a learning method. The procedure described below is a mere example, and each of its processes may be modified in any possible manner. The learning method may further include the learning method in the first phase and a data generation method. In the procedure described below, steps may be eliminated, substituted, or added as appropriate in each embodiment.

Step S501

In step S501, the controller 11 operates as the data obtainer 111 and obtains at least one second learning dataset 227 generated by the data generation apparatus 2.

In the present embodiment, the controller 11 can obtain at least one second learning dataset 227 from the first data pool 85 after step S307. The second learning dataset 227 may be obtained from any other source selected as appropriate in each embodiment. For example, the controller 11 may obtain the second learning dataset 227 directly or indirectly from the data generation apparatus 2.

The controller 11 further obtains multiple first learning datasets 121 in the same manner as in step S101. After obtaining the first and second learning datasets (121, 227), the controller 11 advances the processing to subsequent step S502.

Step S502

In step S502, the controller 11 operates as the learning processor 112 and trains a learning model through machine learning using the multiple first learning datasets 121 and the second learning dataset(s) 227.

In step S502, the controller 11 may retrain each neural network (50, 51) through machine learning using the multiple first learning datasets 121 and the second learning dataset(s) 227. In this relearning, at least one of multiple neural networks may not undergo machine learning. In the present embodiment, at least one of the two neural networks (50, 51) may not undergo machine learning.

In the same manner as in step S102 in the first phase, this relearning may include training to output, in response to an input of each piece of training data (122, 223), values each fitting the answer data (123, 225) from the output layers (507, 517) (step S203) and values fitting each other from the attention layers (503, 513) (step S204). The training to output the values each fitting the answer data may be simply performed without the training to output the values fitting each other from the attention layers. In other words, the relearning may simply include the training to output the values each fitting the answer data (123, 225) from the output layers (507, 517).

In step S502, the controller 11 may train the learning model 52 different from the neural networks (50, 51) through supervised learning using the multiple first learning datasets 121 and the second learning dataset(s) 227. The learning model 52 may be of any type that can be trained through supervised learning and may be selected as appropriate in each embodiment. For example, the learning model 52 may be a neural network, a support vector machine, a linear regression model, or a decision tree model. The architecture of the learning model 52 being a neural network may be the same as one of the neural networks (50, 51) or different from either of the neural networks (50, 51).

In supervised learning, the learning model 52 is trained to output, in response to an input of the training data (122, 223) included in each learning dataset (121, 227), a value that fits the corresponding piece of answer data (123, 225). The supervised learning may be performed with any method selected as appropriate for the type of learning model 52. The supervised learning may be performed with a known method, including backpropagation, regression analysis, and a random forest. In this manner, the trained learning model 52 is trained to be usable in a predetermined estimation task in the same manner as the trained neural networks (50, 51).

A trained learning model is built through the machine learning described above. The trained learning model is at least one of the neural networks (50, 51) or the learning model 52. After completing the machine learning process, the controller 11 advances the processing to subsequent step S503.

Step S503

In step S503, the controller 11 operates as the storage processor 113 and generates information about the trained learning model as the second learning result data 127. The second learning result data 127 allows reproduction of the trained learning model built in step S502. For example, the second learning result data 127 may include information indicating the architecture and computational parameters of the trained learning model. The controller 11 stores the generated second learning result data 127 into a predetermined storage area.

The predetermined storage area may be, for example, the RAM in the controller 11, the storage 12, the storage medium 91, an external storage, or a combination of these. The external storage may be, for example, a data server such as a NAS. In this case, the controller 11 may use the communication interface 13 to store the second learning result data 127 into a data server through a network. The external storage may be connected to the learning apparatus 1. The second learning result data 127 may be in the same storage as the first learning result data 125 or may be in a different storage. After storing the second learning result data 127, the controller 11 ends the series of machine learning processes in the second phase.

The generated second learning result data 127 may be provided to the estimation apparatus 3 at an appropriate time. For example, the controller 11 may transfer the second learning result data 127 to the estimation apparatus 3 in step S503 or in a step separate from step S503. The estimation apparatus 3 receiving the transferred data may obtain the second learning result data 127. In another example, the estimation apparatus 3 may use the communication interface 33 to access the learning apparatus 1 or a data server through a network and obtain the second learning result data 127. In still another example, the estimation apparatus 3 may obtain the second learning result data 127 through the storage medium 93. The second learning result data 127 may be preinstalled in the estimation apparatus 3.

The second learning result data 127 generated through any relearning of the neural networks (50, 51) performed in step S502 as in step S102 may be provided to the data generation apparatus 2 at an appropriate time. The retrained neural networks (50, 51) may thus be used in generating the learning datasets. The learning dataset generation and the relearning of the neural networks (50, 51) may be iterated alternately.

(D) Performing Estimation Task

An operation example of the estimation apparatus 3 in the present embodiment will now be described with reference to FIG. 12. FIG. 12 is a flowchart showing the procedure performed by the estimation apparatus 3 in the present embodiment. The procedure described below is an example of an estimation method. The procedure described below is a mere example, and each of its processes may be modified in any possible manner. The estimation method may further include the learning method and the data generation method described above. In the procedure described below, steps may be eliminated, substituted, or added as appropriate in each embodiment.

Step S701

In step S701, the controller 31 operates as the data obtainer 311 and obtains target data 321 to undergo an estimation task. In the present embodiment, the estimation apparatus 3 is connected to the sensor S through the external interface 37. The controller 31 thus obtains sensing data generated by the sensor S as the target data 321 through the external interface 37.

The target data 321 may be obtained through any other route determined as appropriate in each embodiment. For example, the sensor S may be connected to another computer different from the estimation apparatus 3. In this case, the controller 31 may obtain the target data 321 by receiving the target data 321 transmitted from the other computer. After obtaining the target data 321, the controller 31 advances the processing to subsequent step S702.

Step S702

In step S702, the controller 31 operates as the estimation unit 312 and estimates a feature included in the obtained target data 321 using the trained learning model 70.

In the present embodiment, the trained learning model 70 includes at least one of the neural networks (50, 51) or learning model 52 trained through the machine learning in the second phase. The controller 31 refers to the second learning result data 127 to set the trained learning model 70. The controller 31 then inputs the obtained target data 321 into the trained learning model 70 and performs computation with the trained learning model 70. The computation may be selected as appropriate for the type of trained learning model 70. In this manner, the controller 31 obtains, from the trained learning model 70, an output value corresponding to an estimation result of a feature included in the target data 321. In other words, the controller 31 estimates the feature included in the target data 321 through the computation. After completing estimation of the feature included in the target data 321, the controller 31 advances the processing to subsequent step S703.

Step S703

In step S703, the controller 31 operates as the output unit 313 and outputs information about the estimation result.

The destination and the details of the output information may be determined as appropriate in each embodiment. For example, the controller 31 may output the estimation result of the feature included in the target data 321 directly to the output device 35. For example, the controller 31 may process the information based on the estimation result. The controller 31 may then output the processed information as information about the estimation result. The processed information being output may include, for example, a specific message being output, such as a warning in accordance with the estimation result, and the operation of a target device being controlled in accordance with the estimation result. The information may be output to, for example, the output device 35 and a target device. After completing output of the information about the estimation result, the controller 31 ends the series of estimation processes using the trained learning model 70.

The estimation apparatus 3 may use a trained learning model other than the trained learning model 70 built through the machine learning in the second phase. The estimation apparatus 3 may use at least one of the neural networks (50, 51) built through the machine learning in the first phase. In this case, the first learning result data 125 generated in the first phase may be provided to the estimation apparatus 3 at an appropriate time. The first learning result data 125 may be preinstalled in the estimation apparatus 3. In this manner, the estimation apparatus 3 may use, rather than the trained learning model 70, at least one of the neural networks (50, 51) trained in the first phase to perform the processes in steps S701 to S703.

Characteristics

In the present embodiment described above, each neural network (50, 51) includes a layer nearer the input end than the output layer (507, 517) selected as the attention layer (503, 517). The output layer (507, 517) in each neural network (50, 51) is in a format set for the estimation task to be learned. In contrast, a layer nearer the input end than the output layer (507, 517) in each neural network (50, 51) is in a format that can be set independently of the estimation task.

The machine learning in step S102 simply including the training (step S203) to output, in response to an input of first training data 122, values each fitting the first answer data 123 from the output layers (507, 517) alone may cause a variance in the output values from the attention layers (503, 513) in response to the same input data. In the present embodiment, the machine learning process in step S102 thus also includes, in addition to the training in step S203, training to output values that fit each other from the attention layers (503, 513) in step S204. In steps S304 and S305, this allows appropriate evaluation of the degree of output instability for each piece of second training data 221 based on the output values from the attention layers (503, 513).

The structure in the present embodiment sets layers in a common output format as the attention layers (503, 513) and evaluates the degree of output instability of each neural network (50, 51) for each piece of second training data 221 using a common index, independently of the task to be learned by each neural network (50, 51). In other words, although the output format of the output layer (507, 517) in each neural network (50, 51) is changed in accordance with the estimation task, the same acquisition function may be used to evaluate the degree of output instability for each piece of second training data 221 in step S304. In step S204, the neural networks are trained to output values fitting each other from the attention layers (503, 513). In step S305, the evaluation results of the output values are thus used to appropriately extract at least one piece of second training data 223 estimated to have a high degree of contribution to improved performance of the estimator. The structure in the present embodiment thus allows a common index to be used among neural networks for different tasks in active learning.

In the second phase, the learning apparatus 1 in the present embodiment additionally uses the piece(s) of second training data 223 extracted through active learning to efficiently generate a trained learning model with higher performance. The estimation apparatus 3 in the present embodiment then uses the trained learning model generated in the second phase to perform a predetermined estimation task accurately.

4. Modifications

The embodiment of the present invention described in detail above is a mere example of the present invention in all respects. The embodiment may be variously modified or altered without departing from the scope of the present invention. For example, the embodiment may be modified in the forms described below. The same components as those in the above embodiment are hereafter given the same reference numerals, and the operations that are the same as those in the above embodiment will not be described. The modifications described below may be combined as appropriate.

The estimation system 100 according to the above embodiment is used in a situation for estimating a feature included in sensing data obtained by the sensor S. However, the structure in the above embodiment may be used in other example situations. The structure in the above embodiment is usable in any situation in which any estimation task is performed on any type of data. Modifications for some situations will now be described.

(A) Visual Inspection

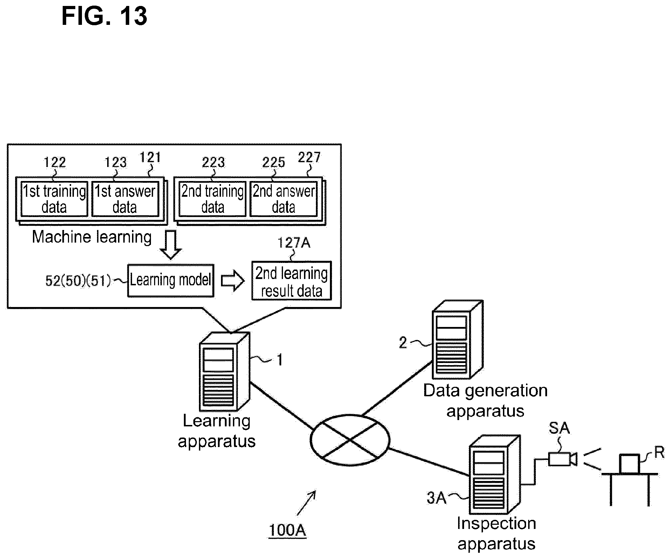

FIG. 13 is a schematic diagram of an inspection system 100A in a first modification used in one situation. In the present modification, the structure in the above embodiment is used in visual inspection of a product R being conveyed in a production line. As shown in FIG. 13, the inspection system 100A in the present embodiment includes a learning apparatus 1, a data generation apparatus 2, and an inspection apparatus 3A. In the same manner as in the above embodiment, the learning apparatus 1, the data generation apparatus 2, and the inspection apparatus 3A may be connected to one another with a network.

The inspection system 100A in the present modification may have the same structure as the system in the above embodiment except that the data to be handled is different. In the same manner as in the above embodiment, the learning apparatus 1 trains neural networks (50, 51) through machine learning using multiple first learning datasets 121 in a first phase. The data generation apparatus 2 generates at least one second learning dataset 227 using the neural networks (50, 51) trained through the machine learning in the first phase. The learning apparatus 1 retrains the neural networks (50, 51) or trains a new learning model 52 through supervised learning in a second phase using multiple first learning datasets 121 and at least one second learning dataset 227.

Each piece of training data (122, 223) is image data of the product R. The product R may include, for example, electronic devices, electronic components, automotive parts, chemicals, and food products. Electronic components may include, for example, substrates, chip capacitors, liquid crystals, and relay coils. Automotive parts may include, for example, connecting rods, shafts, engine blocks, power window switches, and panels. Chemicals may include, for example, packaged tablets or unpackaged tablets. The product R may be a final product after completion of the manufacturing process, an intermediate product during the manufacturing process, or an initial product before undergoing the manufacturing process.

The training data (122, 223) is obtained with a camera SA or a camera of the same type capturing images of the product R. The camera may be of any type. The camera may be, for example, a common digital camera for obtaining RGB images, a depth camera for obtaining depth images, or an infrared camera for imaging the amount of infrared radiation.

The training data (122, 223) includes a feature including the state of the product R. The state of the product R may include the presence or absence of a defect such as a scratch, a stain, a crack, a dent, a burr, uneven color, and foreign matter contamination. Each piece of answer data (123, 225) may thus indicate, for example, whether the product R includes a defect, the type of the defect in the product R, or the range of the defect in the product R. The answer data (123, 225) may be obtained through an operator input. An estimator trained to estimate the state of the product R in image data may be used to estimate the state of the product R in the training data (122, 223). The result of the estimation may be obtained as the answer data (123, 225).

In the second phase, the learning apparatus 1 trains a learning model (at least one of the neural networks (50, 51) or the learning model 52) through machine learning using the training data (122, 223) and the answer data (123, 225). In this manner, the learning model can perform the task of estimating the state of the product in the image data. As in step S503, the learning apparatus 1 generates information about the trained learning model as second learning result data 127A and stores the generated second learning result data 127A into a predetermined storage area.

The inspection apparatus 3A corresponds to the estimation apparatus 3. The inspection apparatus 3A may have the same structure as the estimation apparatus 3 except that the data to be handled is different. The second learning result data 127A may be provided to the inspection apparatus 3A at an appropriate time. In the present modification, the inspection apparatus 3A is connected to the camera SA. The inspection apparatus 3A obtains images of the product R with the camera SA to obtain target image data of the product R. The inspection apparatus 3A uses the trained learning model built by the learning apparatus 1 to estimate the state of the product R based on the obtained target image data.

Hardware Configuration of Inspection Apparatus

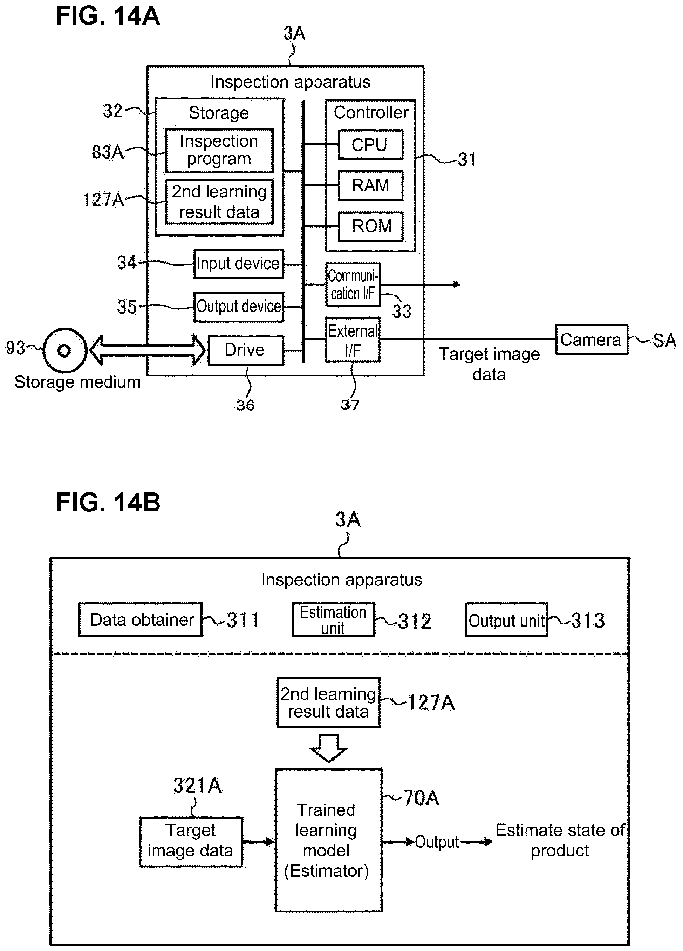

FIG. 14A is a schematic diagram of the inspection apparatus 3A in the present modification, showing its hardware configuration. As shown in FIG. 14A, similarly to the estimation apparatus 3, the inspection apparatus 3A in the present modification is a computer including a controller 31, a storage 32, a communication interface 33, an input device 34, an output device 35, a drive 36, and an external interface 37 that are electrically connected to one another. The inspection apparatus 3A is connected to the camera SA through the external interface 37. The camera SA may be placed as appropriate to capture images of the product R. For example, the camera SA may be placed near a conveyor that conveys the product R. The inspection apparatus 3A may have any other hardware configuration. For the specific hardware configuration of the inspection apparatus 3A, components may be eliminated, substituted, or added as appropriate in each embodiment. The inspection apparatus 3A may be an information processing apparatus dedicated to an intended service, or may be a general-purpose server, a general-purpose PC, or a programmable logic controller (PLC).

The storage 32 in the inspection apparatus 3A in the present modification stores various items of information such as an inspection program 83A and the second learning result data 127A. The inspection program 83A and the second learning result data 127A correspond to the estimation program 83 and the second learning result data 127 in the above embodiment. The inspection program 83A, the second learning result data 127A, or both may be stored in a storage medium 93. The inspection apparatus 3A may obtain the inspection program 83A, the second learning result data 127A, or both from the storage medium 93.

Software Configuration and Operation Example of Inspection Apparatus

FIG. 14B is a schematic diagram of the inspection apparatus 3A in the present modification, showing its software configuration. In the same manner as in the above embodiment, the software configuration of the inspection apparatus 3A is implemented by the controller 31 executing the inspection program 83A. As shown in FIG. 14B, the inspection apparatus 3A has the same software configuration as the estimation apparatus 3, except that the data to be handled is replaced with image data from sensing data. The inspection apparatus 3A thus performs a series of inspection processes in the same manner as the estimation apparatus 3 performing the estimation process.

More specifically, in step S701, the controller 31 operates as a data obtainer 311 and obtains, from the camera SA, target image data 321A of the product R to undergo visual inspection. In step S702, the controller 31 operates as an estimation unit 312 and estimates the state of the product R in the obtained target image data 321A using a trained learning model 70A. More specifically, the controller 31 refers to the second learning result data 127A to set the trained learning model 70A. The trained learning model 70A may be at least one of the neural networks (50, 51) or learning model 52 trained through the machine learning in the second phase. The controller 31 inputs the obtained target image data 321A into the trained learning model 70A and performs computation with the trained learning model 70A. In this manner, the controller 31 obtains, from the trained learning model 70A, an output value corresponding to an estimation result of the state of the product R in the target image data 321A.

In step S703, the controller 31 operates as an output unit 313 and outputs information about the estimation result of the state of the product R. In the same manner as in the above embodiment, the destination and the details of the output information may be determined as appropriate in each embodiment. For example, the controller 31 may output the estimation result of the state of the product R directly to the output device 35. For example, the controller 31 may output a warning indicating any defect included in the product R to the output device 35. For example, when the inspection apparatus 3A is connected to a conveyor (not shown) that conveys the product R, the controller 31 may control the conveyor to separately convey defect-free products R and defective product R in different lines based on the estimation result of the state of the product R.

The structure in the present modification allows a common index to be used among neural networks for different tasks in active learning to build an estimator for visual inspection. At least one piece of second training data 223 extracted through active learning is additionally used to efficiently generate a trained learning model with higher performance. The inspection apparatus 3A uses the trained learning model generated as above to accurately perform visual inspection of the product R accurately.

(B) Estimating State of Target Person

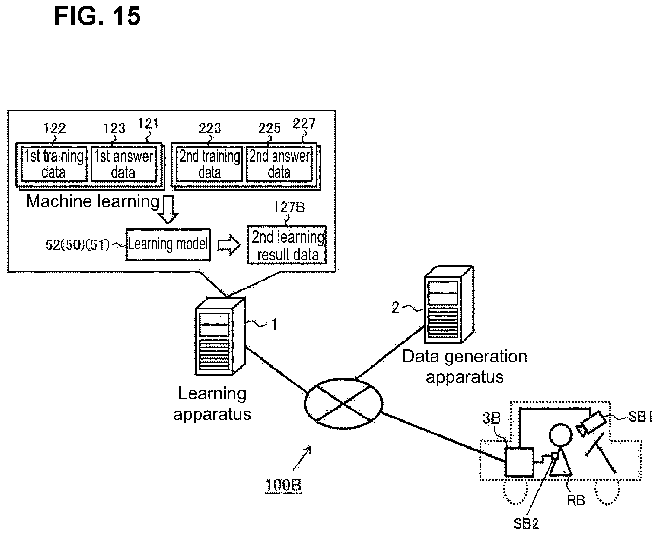

FIG. 15 is a schematic diagram of a monitoring system 100B in a second modification used in one situation. In the present modification, the structure in the above embodiment is used in estimating the state of a target person. In FIG. 15, the state of a driver RB of a vehicle is monitored in one example situation in which the state of a target person is predicted. The driver RB is an example of a target person. As shown in FIG. 15, the monitoring system 100B in the present embodiment includes a learning apparatus 1, a data generation apparatus 2, and a monitoring apparatus 3B. In the same manner as in the above embodiment, the learning apparatus 1, the data generation apparatus 2, and the monitoring apparatus 3B may be connected to one another with a network.

The monitoring system 100B in the present modification may have the same structure as the system in the above embodiment except that the data to be handled is different. In the same manner as in the above embodiment, the learning apparatus 1 trains neural networks (50, 51) through machine learning using multiple first learning datasets 121 in a first phase. The data generation apparatus 2 generates at least one second learning dataset 227 using the neural networks (50, 51) trained through the machine learning in the first phase. The learning apparatus 1 retrains the neural networks (50, 51) or trains a new learning model 52 through supervised learning in a second phase using multiple first learning datasets 121 and at least one second learning dataset 227.

Each piece of training data (122, 223) includes sensing data obtained by a sensor that monitors the state of a subject. The sensor may be of any type that can monitor the state of a person (a subject or target person) and selected as appropriate in each embodiment. In the example in FIG. 15, the sensor that monitors the state of a person includes a camera SB1 and a vital sensor SB2.

The training data (122, 223) is obtained with the camera SB1 and the vital sensor SB2 or sensors of the same type monitoring the state of the subject (driver). For example, the camera SB1 may be a common RGB camera, a depth camera, or an infrared camera. For example, the vital sensor SB may be a clinical thermometer, a blood pressure meter, or a pulse meter. The training data (122, 223) includes image data and vital measurement data.

The training data (122, 223) includes a feature including the state of the subject. In the present modification, the state of the subject may include, for example, the degree of drowsiness felt by the subject, the degree of fatigue felt by the subject, the capacity of the subject to attend to driving, and any combination of these. Each piece of answer data (123, 225) may thus indicate, for example, the type of state of the subject, the numerical value indicating the state of the subject, or the imaging range for the subject. The answer data (123, 225) may be obtained through an operator input. An estimator trained to estimate the state of the target person based on sensing data may be used to estimate the state of the target person based on the training data (122, 223). The result of the estimation may be obtained as the answer data (123, 225).

In the second phase, the learning apparatus 1 trains a learning model (at least one of the neural networks (50, 51) or the learning model 52) through machine learning using the training data (122, 223) and the answer data (123, 225). In this manner, the learning model can perform the task of estimating the state of the target person based on sensing data. As in step S503, the learning apparatus 1 generates information about the trained learning model as second learning result data 127B and stores the generated second learning result data 127B into a predetermined storage area.

The monitoring apparatus 3B corresponds to the estimation apparatus 3. The monitoring apparatus 3B may have the same structure as the estimation apparatus 3 except that the data to be handled is different. The second learning result data 127B may be provided to the monitoring apparatus 3B at an appropriate time. In the present modification, the target sensing data is obtained from the camera SB1 and the vital sensor SB2. The monitoring apparatus 3B uses the trained learning model built by the learning apparatus 1 to estimate the state of the driver RB based on the obtained sensing data.

Hardware Configuration of Monitoring Apparatus

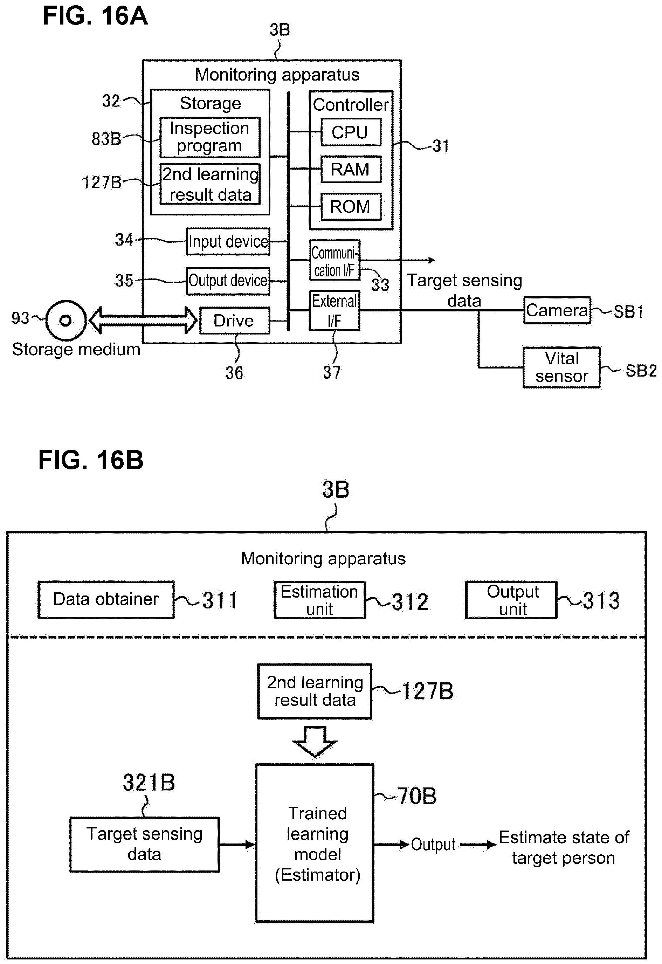

FIG. 16A is a schematic diagram of the monitoring apparatus 3B in the present modification, showing its hardware configuration. As shown in FIG. 16A, the monitoring apparatus 3B in the present modification is a computer including, similarly to the estimation apparatus 3, a controller 31, a storage 32, a communication interface 33, an input device 34, an output device 35, a drive 36, and an external interface 37 that are electrically connected to one another. The monitoring apparatus 3B is connected to the camera SB1 and the vital sensor SB2 through the external interface 37. The camera SB1 may be placed as appropriate to capture images of the driver RB. The vital sensor SB2 may be placed as appropriate to measure the vital signs of the driver RB. The monitoring apparatus 3B may have any other hardware configuration. For the specific hardware configuration of the monitoring apparatus 3B, components may be eliminated, substituted, or added as appropriate in each embodiment. The monitoring apparatus 3B may be an information processing apparatus dedicated to an intended service, or may be a general-purpose computer, a mobile phone including a smartphone, or an in-vehicle apparatus.

The storage 32 in the monitoring apparatus 3B in the present modification stores various items of information such as a monitoring program 83B and the second learning result data 127B. The monitoring program 83B and the second learning result data 127B correspond to the estimation program 83 and the second learning result data 127 in the above embodiment. The monitoring program 83B, the second learning result data 127B, or both may be stored in a storage medium 93. The monitoring apparatus 3B may obtain the monitoring program 83B, the second learning result data 127B, or both from the storage medium 93.

Software Configuration and Operation Example of Monitoring Apparatus

FIG. 16B is a schematic diagram of the monitoring apparatus 3B in the present modification, showing its software configuration. In the same manner as in the above embodiment, the software configuration of the monitoring apparatus 3B is implemented by the controller 31 executing the monitoring program 83B. As shown in FIG. 16B, the monitoring apparatus 3B has the same software configuration as the estimation apparatus 3, except that the data to be handled is sensing data obtained by a sensor monitoring the state of a person. The monitoring apparatus 3B thus performs a series of monitoring processes in the same manner as the estimation apparatus 3 performing the estimation process.

More specifically, in step S701, the controller 31 operates as a data obtainer 311 and obtains target sensing data 321B from the sensor monitoring the state of the driver RB. In the present modification, the sensor includes the camera SB1 and the vital sensor SB2 connected to the monitoring apparatus 3B. The obtained target sensing data 321B thus includes image data obtained from the camera SB1 and vital measurement data obtained from the vital sensor SB2.

In step S702, the controller 31 operates as an estimation unit 312 and estimates the state of the driver RB from the obtained target sensing data 321B using a trained learning model 70B. More specifically, the controller 31 refers to the second learning result data 127B to set the trained learning model 70B. The trained learning model 70B may be at least one of the neural networks (50, 51) or learning model 52 trained through the machine learning in the second phase. The controller 31 inputs the obtained target sensing data 321B into the trained learning model 70B and performs computation with the trained learning model 70B. In this manner, the controller 31 obtains, from the trained learning model 70B, an output value corresponding to an estimation result of the state of the driver RB based on the target sensing data 321B.

In step S703, the controller 31 operates as an output unit 313 and outputs information about the estimation result of the state of the driver RB. The destination and the details of the output information may be determined as appropriate in each embodiment. For example, the controller 31 may output the estimation result of the state of the driver RB directly to the output device 35. For example, the controller 31 may process the information based on the estimation result. The controller 31 may then output the processed information as information about the estimation result.

In one example, the information may be processed into a specific message, such as a warning in accordance with the estimated state of the driver RB. The controller 31 may output the message to the output device 35. More specifically, at least one of the degree of drowsiness or the degree of fatigue felt by the driver RB may be estimated as the state of the driver RB. In this case, the controller 31 may determine whether at least one of the estimated degree of drowsiness or the estimated degree of fatigue exceeds a threshold. The threshold may be determined as appropriate. In response to at least one of the degree of drowsiness or the degree of fatigue exceeding the threshold, the controller 31 may output a warning to the output device 35 to urge the driver RB to stop at, for example, a parking lot and take a rest.

For example, for an autonomous vehicle, the controller 31 may control the autonomous driving operation of the vehicle based on the estimation result of the state of the driver RB. In one example, the vehicle is switchable between an autonomous driving mode in which the system controls the driving of the vehicle and a manual driving mode in which the steering of the driver RB controls the driving of the vehicle.

In this case, upon receiving a switching operation to switch from the autonomous driving mode to the manual driving mode performed by the driver RB or the system driving the vehicle in the autonomous driving mode, the controller 31 may determine whether the estimated capacity of the driver RB to attend to driving exceeds a threshold. In response to the capacity of the driver RB to attend to driving exceeding the threshold, the controller 31 may allow switching from the autonomous driving mode to the manual driving mode. In response to the capacity of the driver RB to attend to driving less than or equal to the threshold, the controller 31 may retain the autonomous driving mode without allowing switching from the autonomous driving mode to the manual driving mode.

While the vehicle is driving in the manual driving mode, the controller 31 may determine whether at least one of the estimated degree of drowsiness or the estimated degree of fatigue exceeds a threshold. In response to at least one of the degree of drowsiness or the degree of fatigue exceeding the threshold, the controller 31 may switch the driving mode from the manual driving mode to the autonomous driving mode and transmit a command to the vehicle system to stop the vehicle at a safe place such as a parking lot. In response to both the degree less than or equal to the threshold, the controller 31 may retain the vehicle driving in the manual driving mode.

While the vehicle is driving in the manual driving mode, the controller 31 may determine whether the estimated capacity to attend to driving is less than or equal to a threshold. In response to the capacity to attend to driving being less than or equal to the threshold, the controller 31 may transmit a command to the vehicle system to decelerate. In response to the capacity exceeding the threshold, the controller 31 may retain the driving of the vehicle operated by the driver RB.

The structure in the present modification allows a common index to be used among neural networks for different tasks in active learning to build an estimator for estimating the state of a target person. At least one piece of second training data 223 extracted through active learning is additionally used to efficiently generate a trained learning model with higher performance. The monitoring apparatus 3B uses the trained learning model generated as above to accurately perform the task of estimating the state of the driver RB.

The person whose state is to be estimated may be any person other than the driver RB of the vehicle shown in FIG. 15. For example, the target person may include a worker working in, for example, an office or a factory or a measurement target person whose vital signs are to be measured.

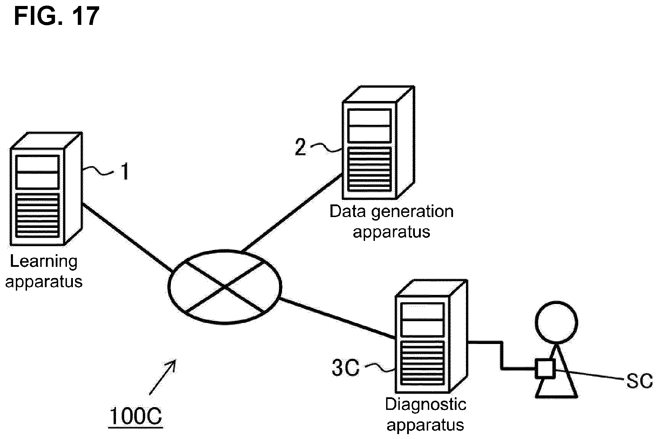

FIG. 17 is a schematic diagram of a system for predicting the state of a target person used in another situation. A diagnostic system 100C illustrated in FIG. 17 includes a learning apparatus 1, a data generation apparatus 2, and a diagnostic apparatus 3C. The diagnostic apparatus 3C corresponds to the monitoring apparatus 3B. In the example in FIG. 17, the diagnostic apparatus 3C is connected to a vital sensor SC and obtains target sensing data about a measurement target person from the vital sensor SC. The diagnostic apparatus 3C estimates the state of the measurement target person in the same manner as the monitoring apparatus 3B. The state of the measurement target person may include a health condition of the person. For example, the health condition may include whether the person is healthy or shows any sign of disease. Each piece of answer data (123, 225) may indicate, for example, the type of health condition of a person and the probability of a person developing a target disease.

In the above embodiment, each neural network (50, 51) is a convolutional neural network. However, each neural network (50, 51) may be of any other type selected as appropriate in each embodiment. Each neural network (50, 51) may be a fully connected neural network or a recurrent neural network, other than a convolutional neural network. Each neural network (50, 51) may be a combination of multiple neural networks having different architectures. Each neural network (50, 51) may have any architecture designed as appropriate in each embodiment.

In the above embodiment, each attention layer (503, 513) is a convolutional layer as an intermediate layer in a convolutional neural network. However, the attention layer (503, 513) may be any layer other than a convolutional layer selected as appropriate in each embodiment. The attention layer may be, for example, an intermediate layer such as a pooling layer and a fully connected layer, other than the convolutional layer. When the attention layer is a pooling layer that performs a pooling process on the output from a convolutional layer (specifically, the pooling layer immediately after the convolutional layer), the output from the pooling layer can be used in the same manner as the output from the convolutional layer. Thus, the score 222 can be calculated based on the output value from the pooling layer in the same manner (using any of Formulas 1 to 3) as in the above embodiment. When the attention layer is a fully connected layer including multiple neurons (nodes), the output from the fully connected layer can be used in the same manner as the output from the convolutional layer. Thus, the score 222 can be calculated based on the output value from the fully connected layer in the same manner (using any of Formulas 1 to 3) as in the above embodiment. When the attention layer is a fully connected layer including one neuron (node), the score 222 can be calculated based on the output value from the fully connected layer in the manner indicated by Formula 3.

In the above embodiment, the learning apparatus 1 performs both the machine learning in the first phase and the machine learning in the second phase. The learning apparatus 1 and the data generation apparatus 2 are separate computers. However, the learning system 101 may have any other structure. For example, different computers may each perform the machine learning in the first phase or the machine learning in the second phase. For example, the learning apparatus 1 and the data generation apparatus 2 may be integrated into one computer.

In the above embodiment, the data generation apparatus 2 uses the score 222 derived by each neural network (50, 51) to extract, from the second training data 221 unlabeled with answer data, at least one piece of second training data 223 to be labeled with answer data. However, the extraction using the score 222 may be performed in any other manner. For example, the data generation apparatus 2 may use the score 222 to extract at least one learning dataset estimated to have a high degree of contribution to improved performance of an estimator from multiple pieces of training data that have been labeled with answer data, or more specifically, from multiple learning datasets. This learning dataset extraction process may be performed in the same procedure as the extraction process for the second training data 223 described above. In this case, the second training data 221 may be labeled with answer data. Step S306 may be eliminated from the procedure performed by the data generation apparatus 2. The generator 215 may be eliminated from the software configuration of the data generation apparatus 2.

REFERENCE SIGNS LIST

| | |
|---|---|
| 100 | estimation system |
| 101 | learning system |
| 1 | learning apparatus |
| 11 | controller |
| 12 | storage |
| 13 | communication interface |
| 14 | input device |
| 15 | output device |
| 16 | drive |
| 111 | data obtainer (first data obtainer) |
| 112 | learning processor |
| 113 | storage processor |
| 121 | first learning dataset |
| 122 | first training data |
| 123 | first answer data |
| 125 | first learning result data |
| 127 | second learning result data |
| 81 | learning program |
| 85 | first data pool |
| 91 | storage medium |
| 2 | data generation apparatus |
| 21 | controller |
| 22 | storage |
| 23 | communication interface |
| 24 | input device |
| 25 | output device |
| 26 | drive |
| 211 | model obtainer |
| 212 | data obtainer (second data obtainer) |
| 213 | evaluator |
| 214 | extractor |
| 215 | generator |

216     output unit
221     second training data
222     score
223     (extracted) second training data
225     second answer data
227     second learning dataset
82      data generation program
87      second data pool
92      storage medium
3       estimation apparatus
31      controller
32      storage
33      communication interface
34      input device
35      output device
36      drive
37      external interface
311     data obtainer
312     estimation unit
313     output unit
321     target data
83      estimation program
93      storage medium
50      first neural network
501     input layer
503     attention layer
507     output layer
51      second neural network
511     input layer
513     attention layer
517     output layer
52      learning model
70      estimator

**Claims**

1.  A learning system, comprising:

    a first data obtainer configured to obtain a plurality of first learning datasets each including a pair of first training data and first answer data, the first answer data indicating a feature included in the first training data;
    a learning processor configured to train a plurality of neural networks through machine learning using the obtained plurality of first learning datasets, the plurality of neural networks each including a plurality of layers between an input end and an output end of each neural network, the plurality of layers including an output layer nearest the output end and an attention layer nearer the input end than the output layer, the machine learning including training the plurality of neural networks to output, in response to an input of the first training data included in each of the plurality of first learning datasets into each of the plurality of neural networks, values each fitting the first answer data from the output layers in the plurality of neural networks and values fitting each other from the attention layers in the plurality of neural networks;
    a second data obtainer configured to obtain a plurality of pieces of second training data;
    an evaluator configured to obtain an output value from the attention layer in each of the plurality of neural networks in response to an input of each of the plurality of pieces of second training data into each of the trained plurality of neural networks and to calculate, based on the output value obtained from the attention layer in each of the plurality of neural networks, a score indicating a degree of output instability of each of the plurality of neural networks for each of the plurality of pieces of second training data;
    an extractor configured to extract, from the plurality of pieces of second training data, at least one piece of second training data with the score satisfying a condition for determining that the degree of output instability is high; and

a generator configured to generate at least one second learning dataset each including a pair of the extracted at least one piece of second training data and second answer data by receiving an input of the second answer data for each of the extracted at least one piece of second training data, the second answer data indicating a feature included in the extracted at least one piece of second training data,

wherein the learning processor retrains the plurality of neural networks through machine learning or trains a learning model different from each of the plurality of neural networks through supervised learning using the plurality of first learning datasets and the at least one second learning dataset.

2. The learning system according to claim 1, wherein the plurality of neural networks are convolutional neural networks, and

the attention layers are convolutional layers.

3. The learning system according to claim 2, wherein

the output values output from the attention layers in the plurality of neural networks fitting each other indicate that attention maps derived from feature maps output from the convolutional layers in the convolutional neural networks match each other.

4. The learning system according to any one of claims 1 to 3, wherein

the plurality of layers in each of the plurality of neural networks include computational parameters for computation, training the plurality of neural networks includes iteratively adjusting the computational parameters for the plurality of neural networks to reduce an error between the output value output from the output layer in each of the plurality of neural networks and the first answer data and to reduce an error between the output values output from the attention layers in the plurality of neural networks in response to the input of the first training data included in each of the plurality of first learning datasets into each of the plurality of neural networks, and a learning rate for the error between the output values output from the attention layers increases in response to every adjustment of the computational parameters.

5. The learning system according to any one of claims 1 to 4, wherein

the first training data and the second training data include image data of a product, and
the feature includes a state of the product.

6. The learning system according to any one of claims 1 to 4, wherein

the first training data and the second training data include sensing data obtained from a sensor monitoring a state of a subject, and
the feature includes the state of the subject.

7. A data generation apparatus, comprising:

a model obtainer configured to obtain a plurality of neural networks trained through machine learning using a plurality of first learning datasets each including a pair of first training data and first answer data, the first answer data indicating a feature included in the first training data, the plurality of neural networks each including a plurality of layers between an input end and an output end of each neural network, the plurality of layers including an output layer nearest the output end and an attention layer nearer the input end than the output layer, the plurality of neural networks being trained through the machine learning to output, in response to an input of the first training data included in each of the plurality of first learning datasets into each of the plurality of neural networks, values each fitting the first answer data from the output layers in the plurality of neural networks and values fitting each other from the attention layers in the plurality of neural networks;
a data obtainer configured to obtain a plurality of pieces of second training data;
an evaluator configured to obtain an output value from the attention layer in each of the plurality of neural networks in response to an input of each of the plurality of pieces of second training data into each of the trained plurality of neural networks and to calculate, based on the output value obtained from the attention layer in each of the plurality of neural networks, a score indicating a degree of output instability of each of the plurality of neural networks for each of the plurality of pieces of second training data;
an extractor configured to extract, from the plurality of pieces of second training data, at least one piece of second training data with the score satisfying a condition for determining that the degree of output instability is high; and
a generator configured to generate at least one second learning dataset each including a pair of the extracted at least one piece of second training data and second answer data by receiving an input of the second answer data for each of the extracted at least one piece of second training data, the second answer data indicating a feature included in the extracted at least one piece of second training data.

8. The data generation apparatus, further comprising:
an output unit configured to output the at least one generated second learning dataset in a manner usable for training a learning model through supervised learning.

9. A data generation method implementable by a computer, the method comprising:

obtaining a plurality of neural networks trained through machine learning using a plurality of first learning datasets each including a pair of first training data and first answer data, the first answer data indicating a feature included in the first training data, the plurality of neural networks each including a plurality of layers between an input end and an output end of each neural network, the plurality of layers including an output layer nearest the output end and an attention layer nearer the input end than the output layer, the plurality of neural networks being trained through the machine learning to output, in response to an input of the first training data included in each of the plurality of first learning datasets into each of the plurality of neural networks, values each fitting the first answer data from the output layers in the plurality of neural networks and values fitting each other from the attention layers in the plurality of neural networks;
obtaining a plurality of pieces of second training data;
obtaining an output value from the attention layer in each of the plurality of neural networks in response to an input of each of the plurality of pieces of second training data into each of the trained plurality of neural networks;
calculating, based on the output value obtained from the attention layer in each of the plurality of neural networks, a score indicating a degree of output instability of each of the plurality of neural networks for each of the plurality of pieces of second training data;
extracting, from the plurality of pieces of second training data, at least one piece of second training data with the score satisfying a condition for determining that the degree of output instability is high; and
generating at least one second learning dataset each including a pair of the extracted at least one piece of second training data and second answer data by receiving an input of the second answer data for each of the extracted at least one piece of second training data, the second answer data indicating a feature included in the extracted at least one piece of second training data.

10. A data generation program for causing a computer to perform operations comprising:

obtaining a plurality of neural networks trained through machine learning using a plurality of first learning datasets each including a pair of first training data and first answer data, the first answer data indicating a feature included in the first training data, the plurality of neural networks each including a plurality of layers between an input end and an output end of each neural network, the plurality of layers including an output layer nearest the output end and an attention layer nearer the input end than the output layer, the plurality of neural networks being trained through the machine learning to output, in response to an input of the first training data included in each of the plurality of first learning datasets into each of the plurality of neural networks, values each fitting the first answer data from the output layers in the plurality of neural networks and values fitting each other from the attention layers in the plurality of neural networks;
obtaining a plurality of pieces of second training data;
obtaining an output value from the attention layer in each of the plurality of neural networks in response to an input of each of the plurality of pieces of second training data into each of the trained plurality of neural networks;
calculating, based on the output value obtained from the attention layer in each of the plurality of neural networks, a score indicating a degree of output instability of each of the plurality of neural networks for each of the plurality of pieces of second training data;
extracting, from the plurality of pieces of second training data, at least one piece of second training data with the score satisfying a condition for determining that the degree of output instability is high; and
generating at least one second learning dataset each including a pair of the extracted at least one piece of second training data and second answer data by receiving an input of the second answer data for each of the extracted at least one piece of second training data, the second answer data indicating a feature included in the extracted at least one piece of second training data.

# FIG. 1

**FIG. 2**

1

Learning apparatus

12 — Storage

81 — Learning program

85 — 1st data pool

125 — 1st learning result data

127 — 2nd learning result data

Controller

CPU

RAM — 11

ROM

13

Communi-cation I/F

Input device — 14

Output device — 15

91 — Storage medium

Drive

16

**FIG. 3**

2

Data generation apparatus

22 — Storage

82 — Data generation program

87 — 2nd data pool

125 — 1st learning result data

Controller

CPU

RAM — 21

ROM

23

Communi-cation I/F

Input device — 24

Output device — 25

92 — Storage medium

Drive

26

# FIG. 4

# FIG. 5A

# FIG. 5B

Learning apparatus

Data obtainer ~111    Learning processor ~112    Storage processor ~113    ~1

122    123

1st training data | 1st answer data    ~121

2nd training data | 2nd answer data    ~227

223    225

1st neural network    50    Output value

2nd neural network    51    Output value    127    2nd learning result data

Learning model    52    Output value

# FIG. 6

## FIG. 7

3

Estimation apparatus

| Data obtainer | ~311 | Estimation unit | ~312 | Output unit | ~313 |

2nd learning result data ~127

321

Target data → Trained learning model (Estimator) ~70 →Output→ Estimate feature

## FIG. 8

Start

S101 ~ Obtain multiple 1st learning datasets

S102 ~ Train multiple neural networks through machine learning

S103 ~ Store result of machine learning

End

## FIG. 9

```
                    ┌─────────────────────┐
                    │ Machine learning:   │
                    │       Start         │
                    └─────────────────────┘
                               │
                               ▼
S201  ┌──────────────────────────────────────────────────────┐
      │        Prepare neural networks to undergo learning     │
      └──────────────────────────────────────────────────────┘
                               │
                               ▼
S202  ┌──────────────────────────────────────────────────────┐
      │ Input 1st training data into each neural network and obtain │
      │  output values from attention layer and output layer   │
      └──────────────────────────────────────────────────────┘
                               │
                               ▼
S203  ┌──────────────────────────────────────────────────────┐
      │ Adjust computational parameters for each neural network │
      │    to reduce 1st error in output value from output layer │
      └──────────────────────────────────────────────────────┘
                               │
                               ▼
S204  ┌──────────────────────────────────────────────────────┐
      │ Adjust computational parameters for at least one neural network to │
      │ reduce 2nd error between output values from attention layers │
      └──────────────────────────────────────────────────────┘
                               │
                               ▼
                                      Yes
S205      ◇ To be iterated? ◇────────────────────┐      S206
                               │                  ▼
                               │ No    ┌──────────────────────────────┐
                               │       │ Increase learning rate for 2nd error │
                               │       └──────────────────────────────┘
                               ▼
                    ┌─────────────────────┐
                    │ Machine learning:   │
                    │        End          │
                    └─────────────────────┘
```

## FIG. 10

Start

S301 — Obtain multiple trained neural networks

S302 — Obtain multiple pieces of 2nd training data

S303 — Input each 2nd training data piece into each neural network and obtain output value from attention layer in each neural network

S304 — Calculate, based on obtained output value, score indicating degree of output instability for each 2nd training data piece

S305 — Extract at least one 2nd training data piece with score satisfying condition for determining high degree of instability

S306 — Receive input of 2nd answer data for extracted 2nd training data piece to generate at least one 2nd learning dataset

S307 — Output generated 2nd learning dataset

End

## FIG. 11

Start

S501 — Obtain at least one 2nd learning dataset

S502 — Train learning model through machine learning using 1st and 2nd learning datasets

S503 — Store result of machine learning

End

## FIG. 12

Start

S701 — Obtain target data

S702 — Estimate feature included in target data using trained estimator

S703 — Output information about estimation result

End

# FIG. 13

## FIG. 14A

3A

Inspection apparatus

32 — Storage

83A — Inspection program

127A — 2nd learning result data

Controller

CPU

RAM

ROM

31

34 — Input device

35 — Output device

Communication I/F

33

External I/F

37

93 — Storage medium

Drive

36

Target image data

Camera — SA

## FIG. 14B

3A

Inspection apparatus

Data obtainer ~311     Estimation unit ~312     Output unit ~313

2nd learning result data ~127A

321A

Target image data

Trained learning model (Estimator) ~70A

Output → Estimate state of product

# FIG. 15

## FIG. 16A

3B

**Monitoring apparatus**

32 — Storage
83B — Inspection program
127B — 2nd learning result data

Controller
CPU
RAM
ROM

31

34 — Input device
35 — Output device

Communi-cation I/F 33

External I/F

Target sensing data

Camera ~SB1

Vital sensor ~SB2

93 — Storage medium

Drive 36

37

## FIG. 16B

3B

**Monitoring apparatus**

Data obtainer ~311    Estimation unit ~312    Output unit ~313

2nd learning result data ~127B

321B

Target sensing data → Trained learning model (Estimator) ~70B → Output → Estimate state of target person

# FIG. 17

Learning apparatus 1

Data generation apparatus 2

Diagnostic apparatus 3C

SC

100C

<div align="center">**INTERNATIONAL SEARCH REPORT**</div>

| | International application No. |
|---|---|
| | PCT/JP2019/017585 |

**A. CLASSIFICATION OF SUBJECT MATTER**
Int.Cl. G06T7/00(2017.01)i

According to International Patent Classification (IPC) or to both national classification and IPC

**B. FIELDS SEARCHED**

Minimum documentation searched (classification system followed by classification symbols)
Int.Cl. G06T7/00

Documentation searched other than minimum documentation to the extent that such documents are included in the fields searched
| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | BELUCH, H. W. et al., The power of ensembles for active learning in image classification, IEEE/CVF Conference on Computer Vision and Pattern Recognition, IEEE, 2018, ISBN 978-1-5386-6420-9 | 1-10 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10.07.2019 | 23.07.2019 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2019/017585

<What is examined>
    Claim 8 recites "the at least one or more second learning data sets" that have been created. Meanwhile, claim 8 does not recite "at least one or more second learning data sets". Thus it is unclear what "at least one or more second learning data sets" are.
    Accordingly, claim 8 does not fulfill the requirement for clarity under PCT Article 6.
    However, claim 7 recites "at least one or more second learning data sets", and thus it is considered that claim 8 is intended to cite claim 7.
    Accordingly claim 8 shall cite claim 7, and examination has been carried out in accordance therewith.

Form PCT/ISA/210 (extra sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012026982 A

**Non-patent literature cited in the description**

- **WILLIAM H. BELUCH ; TIM GENEWEIN ; ANDREAS NÜRNBERGER ; JAN M. KOHLER.** The power of ensembles for active learning in image classification. *IEEE Conference on Computer Vision and Pattern Recognition (CVPR),* 2018, 9368-9377